(19) Europäisches Patentamt
European Patent Office
Office européen des brevets

(11) Publication number: **0 125 007**
**B1**

(12) **EUROPEAN PATENT SPECIFICATION**

(45) Date of publication of patent specification: **04.03.87**

(51) Int. Cl.$^4$: **A 01 D 43/06,** B 65 G 67/22

(21) Application number: **84302268.2**

(22) Date of filing: **03.04.84**

(54) **Forage harvester with movable spout.**

(30) Priority: **06.04.83 US 482690**
**06.04.83 US 482691**

(43) Date of publication of application:
**14.11.84 Bulletin 84/46**

(45) Publication of the grant of the patent:
**04.03.87 Bulletin 87/10**

(84) Designated Contracting States:
**AT BE CH DE FR GB IT LI NL SE**

(56) References cited:
**EP-A-0 070 015**
**US-A-3 910 286**

(73) Proprietor: **DEERE & COMPANY**
**1 John Deere Road**
**Moline Illinois 61265 (US)**

(72) Inventor: **Johnson, Stanley Jerome**
**2706 Cedar Heights Drive**
**Cedar Falls Iowa 50613 (US)**
Inventor: **Gold, Gary Lee**
**231 Hollywood Avenue**
**Waterloo Iowa 50701 (US)**

(74) Representative: **Pears, David Ashley et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 125 007 B1

## Description

The present invention relates to a forage harvester having a movable spout for directing crop into a receiving vehicle, powered feed rolls for propelling the crop into the spout, and a control unit controlling a spout-positioning mechanism so as to cause the spout to sweep automatically from side to side and spread the crop in the receiving vehicle.

It is known to automatically align the crop discharge spout of a forage harvester with respect to the tongue of a trailing crop-receiving wagon to reduce crop spillage. Such systems are described in US Patent No. 3,786,945 and in US Patent No. 4,042,132. Another such system, utilizing electro-optical devices, is described in British Patent Application GB 2073914, published 21st October 1981, in which it is suggested that even wagon filling can be obtained by continuously sweeping the spout back and forth in an oscillatory manner. However, such continuous sweeping requires large amounts of energy and would increase the rate of wear of the mechanical or hydraulic components.

It is also known to maintain the spout within distinct wide and narrow ranges, depending upon whether the forage harvester is travelling straight or is executing a turn, as shown in our published European application EP 0 070 015.

An object of the present invention is to provide a forage harvester with a spout-aiming system which achieves uniform wagon filling without producing unnecessary spout movements.

The forage harvester according to the invention is characterised by sensing device sensing whether the feed rolls are rotating above a threshold speed of rotation and providing a signal to the control unit to prevent the automatic sweeping of the spout when the feed rolls are not rotating above the threshold speed of rotation.

It is known (US 3 910 286) to sense the rotational speed of the cylinder of a harvesting machine and to give a warning or initiate automatic action to attempt to clear a jam, when the speed falls below a certain value.

Known spout control systems utilize analog and discrete component circuitry and thus, their functional complexity is limited by cost considerations. Furthermore, although these systems help to prevent crop spillage, they do not provide automatic even wagon filling because, while in straight line travel, the spout may spend a majority of the time directing crop to one side or the other of the wagon. Nor do they prevent spout sweeping when the forage harvester feed rolls are not rotating and no crop is being discharged from the spout. Therefore, it is desirable to make use of advanced electronics technology to overcome this problem and to implement other desired spout-aiming control functions.

Accordingly the forage harvester according to the invention preferably includes a microprocessor-based control unit which automatically aims the forage harvester spout as a function of sensed parameters, such as the wagon-tongue angle. The control unit automatically sweeps the spout through a series of sweep mode positions under certain conditions. A magnetic pickup is mounted adjacent to one of the drive chain sprockets associated with the forage harvester feed rolls to sense the rotation thereof. The control unit receives the signal from the magnetic pickup and responds by preventing sweep mode spout movement if the signal indicates that the feed rolls are not rotating fast enough. The control unit also generates an alarm signal in response to an open circuit failure of the pickup. The system may also be provided with a diagnostic capability.

The invention will be described in more detail by way of example, with reference to the accompanying drawings, in which:

Fig. 1 is an illustration depicting a typical agricultural machine, such as a forage harvester, pulling a crop-receiving wagon;

Fig. 2 is a simplified schematic representation of the control unit of a forage harvester embodying the invention;

Fig. 3 is a detailed circuit schematic of the auto control unit of Fig. 2;

Figs. 4a—4p are logic flow diagrams of the main control algorithm executed by the microprocessor of Fig. 3;

Fig. 5 is a logic flow diagram of a routine executed during operation of the algorithm of Figs. 4a—4p;

Fig. 6 is a schematic representation of the sweep mode positions of the spout;

Fig. 7 is a logic flow diagram of a check limit and output command routine executed during operation of the algorithm of Figs. 4a—4p;

Fig. 8 is a logic flow diagram of a manual operation test routine executed during operation of the algorithm of Figs. 4a—4p;

Fig. 9 is a circuit schematic of a mag pickup sensing circuit included in the control unit of Fig. 3;

Figs. 10—13 are logic flow diagrams of a control algorithm executed by the present invention; and

Fig. 14 is a logic flow diagram of a shift-bit subroutine included in the logic flow diagram of Fig. 12.

Detailed description

As seen in Fig. 1, a tractor-drawn forage harvester 10, or a self-propelled forage harvester (not shown), includes a conventional drawbar which is hidden from view by a rotatable forage dispensing spout 14. The tongue 16 of a wagon 18 is hitched to the drawbar so that the wagon 18 receives the material discharged from the spout 14. A spout angle is defined as the relative angle between the spout 14 and the fore-and-aft axis of the harvester 10. A tongue angle is defined as the relative angle between the wagon tongue 16 and the fore-and-aft axis.

A control system 22, schematically shown in Fig. 2, controls the position of the spout 14, either automatically or manually, via a known elec- trohydraulic circuit 24, which is currently used in production forage harvesters to move the spout 14 left or right. Circuit 24 includes a conventional bi-directional fluid motor 26 for rotating the spout 14 either left or right, viewing Fig. 1, in response to fluid received from pilot-operated directional control valve 28, connected to a pump-fed pressure line 30 and a tank line 32. Left and right solenoid-operated pilot valves 34 and 36 operate the directional control valve 28 in response to control signals applied to left and right control lines 38 and 40, respectively. For operating with an open-center hydraulic system, (not shown), circuit 24 includes an optional pilot-operated bypass valve 42 controlled by solenoid-operated valve 44 which receives control signals via control line 46. It should be noted that it is within the scope of this invention to substitute an electric powered motor for the hydraulic motor 26 and an electric control circuit for the hydraulic circuit 24.

A manual directional control switch module 50 includes a double pole, double throw momentary-type switch 51 with one side of both poles connected to the +12 volt terminal of the vehicle battery or power supply. Left and right switch contacts 52 and 54 are connected to left and right input or control lines 38 and 40, respectively. Optional open center contacts 56 and 58 are both connected to control line 46 so that valve 44 is actuated to close bypass valve 42 whenever switch 51 is in contact with contacts 52 or 54.

Referring now to Fig. 3, the spout angle sensor 60 and the tongue angle sensor 62 both preferably consist of conventional rotary potentiometers (pots) connected to generate voltages indicative of the spout angle and the tongue angle, respectively. In the case of a non-towed, crop-receiving wagon, a wagon position signal could be obtained by the use of an optical wagon position sensing system, such as described in the aforesaid published British Patent Specification, No. 2,073,914. The spout angle voltage generated by spout angle sensor 60 may be considered to be the feedback signal for the automatic control circuit 64. The automatic control circuit 64 generates left and right control signals in output lines 66 and 68 and in output line 70, as a function of the position of the tongue and of the spout. Output lines 66, 68 and 70 are connected to control lines 38, 40 and 46, respectively. Spout and tongue angle sensors 60 and 62 are connected to inputs of a conventional multiplexer 72. Potentiometers 74, 76 and 78 are also coupled to input lines 1, 5 and 2 of the multiplexer 72 and provide adjustable calibration signals that will be explained later.

The spout and tongue pots preferably have zero to full-scale resistance ranges which span over 340 degrees and with deadband ranges of 20 degrees. The resistance ranges are positioned so that one-half of the full scale resistance corresponds to a straight-back spout or tongue position. Furthermore, for diagnostic purposes, a pair of points within the full scale resistance ranges, one being approximately 5 degrees from the zero resistance point, the other being approximately 1 degree from the full scale resistance point, are used to define the boundaries of "electrical" or "working" ranges of the potentiometer.

The spout potentiometer 60 is preferably gear-coupled to the spout so that a spout position angular range of approximately 143 degrees corresponds to the pot full scale resistance range or "working range" of 334 degrees. Thus, the "working" range for the spout pot 60 corresponds to a range of spout positions of approximately 140 degrees. The tongue pot, 62, however, is directly coupled to the tongue 16 so that there is a 1:1 relationship between the tongue angle range and the angle range of the tongue pot 62. The relationship of the signals from the potentiometers 60 and 62 to values corresponding to this "electrical" range is examined to determine whether potentiometer error flags, or a spout wrap-around error flag, should be generated. This is further described later herein with reference to steps 294, 302 and 304—336 of a microprocessor program, for example. Magnetic pickup 65 is coupled to Micro ports T1 and AN1 via a circuit 120 which will be described in detail with reference to Fig. 9.

Pull-up and pull-down biasing resistors (not shown) are connected to the wipers of potentiometers 74, 76 and 78. For spout and tongue calibration potentiometers 74, 76, these biasing resistors are chosen so that in the event of an open circuit condition in the wiper lead, the voltages received by the multiplexer 72 will correspond to a centered calibration adjustment. For the wagon width potentiometer 78, the biasing resistors are chosen so that the wiper open circuit voltage will correspond to the normal width of a typical wagon.

The multiplexer 72 feeds selected signals to the analog input AN0 of a microprocessor (micro) 80. The micro 80 includes a central processing unit, ROM program memory, a RAM data memory and input and output ports. In general, the microprocessor ROM stores instructions, which comprise the coded information that controls the activities of the central processing unit. The microprocessor RAM stores the coded data information processed by the central processor unit. The central processor unit reads each instruction from the program memory according to a predetermined sequence in order to control its data processing activities. The microprocessor program, which will be described later, is represented by the flow charts of Fig. 4a—4p, 5, 7 and 8.

The control signals generated by the microprocessor 80 are applied to the address inputs (not shown) of the multiplexer 72, to relay drivers 82 and 84, and to LED drivers 85, 86, 87 and 88. The LED drivers drive corresponding left and right spout indicator lights 105 and 106 and left and right tongue indicator lights 107 and 108, which are preferably located on an operator observable panel. Relay drivers 82 and 84 drive relays 90 and 92, respectively, in response to control signals generated at micro outputs P10 and P11 to operate respective pilot valves 36 and 34 or circuit 24. Diodes D1 and D2 provide for energization of relay 94 and pilot valve 44 whenever either of relays 90 and 92 is energized. Diode D3 provides a path for inductive flyback current from relay 94. Although not shown, it can be assumed that drivers 82 and 84 include similar flyback diodes.

The anodes of diodes D1 and D2 are respectively connected to relay sensing inputs P04 and P05 of the micro 80 via identical voltage limiting and filtering circuits 96 and 98. Circuit 98 is shown in detail and includes resistors R1, R2 and R3, a zener diode D4 (such as an IN4735) and capacitor C1 connected as shown. Through circuits 96 and 98, the micro 80 senses energization of lines 66 and 68, either manually due to operation of switch 51 or automatically due to signals generated at micro outputs P10 and P11. The circuits 96 and 98 protect the micro 80 from high voltage and transients.

Jumper circuits 100 and 102 and a switch 104 may be coupled to the micro 80 so that by opening or shorting various ones of the jumpers, the operation of the circuit 64 can be adapted for specific situations. For example, a spout sweep mode of operation may be enabled or disabled by opening or closing, respectively, switch 104.

Referring now to the circuit 120 of Fig. 9, the mag pickup 65 is coupled through an LC filter 122 (with a ferrite bead type inductor) to resistor 124. Resistor 124 is coupled to resistor 126, to ground via diodes 132, 134 and 136 and to micro AC input port T1 via capacitor 138. Resistor 126 is coupled to +5 volts via resistor 128 and to the base of transistor 130. The collector of transistor 130 is coupled to +5 volts. The emitter of transistor 130 is coupled to ground via resistor 140 and to the micro port AN1. Thus, the mag pickup generates an AC signal which has a frequency proportional to the feed roll rotation speed and circuit 120 communicates this AC signal to micro AC input T1. Circuit 120 also communicates to micro port AN1 a DC voltage level which is high when the mag pickup is open-circuited and which is low when the mag pickup is not open-circuited. The purpose for this will become apparent from the description which follows.

The micro 80 includes a built-in comparator (not shown) which is coupled to the AC input, T1. The result is that the output of this built-in comparator is high on the positive half cycle of the mag pickup voltage at diodes 132 and 136 and is low on the negative half cycle of the mag pickup voltage. The output of this comparator is examined during operation of the algorithm which is described later herein.

The main control algorithm will now be described with reference to the flow chart shown in Figs. 4a—4p, 5, 7 and 8. The algorithm begins at step 202 in response to a hardware reset or upon an external or timer interrupt. At steps 204—208, the external interrupt and the timer interrupt are disabled and the random access memory (RAM) is cleared. In step 210, a hardware timer (not shown) which is integral to the micro 80, is initialized. This hardware timer periodically generates a flag signal (every 80 milliseconds, for example) which is used to obtain a desired time interval for use with the software timers described later.

In step 212, a turn delay software timer and a sweep mode delay software timer are started. Then, in step 214, the spout position or angle is read from sensor 60. In step 216, left and right "undershoot" registers are initialized to values representing 3 degrees, which is initially assumed to be the amount of spout over-travel.

The main loop begins with a manual operation test routine 217. This manual operation test routine (which is described in detail with reference to Fig. 8) sets or clears a manual flag, depending upon whether or not any signals at relay sense inputs P04 or P05 are due to manual operation of switch module 50.

After the manual test routine, the algorithm proceeds to step 218 which directs the algorithm to step 268 if the hardware timer flag is not set; otherwise, the algorithm proceeds to steps 220—226 where the turn delay timer and the sweep mode delay timer are decremented unless they are already decremented to zero.

The turn delay timer (timer 1) is used to maintain the spout at a target position closely aligned with the center of the wagon and to prevent operation of the sweep mode until 15 seconds expire after the forage harvester completes a turning operation (see steps 378, 384, 386 and 406). This assures that the wagon will be closely aligned with respect to the fore-and-aft axis of the forage harvester before the spout is allowed to be misaligned by a larger angle from the center of the wagon.

The sweep delay timer (timer 2) is used to maintain the spout at each sweep mode position for 15 seconds (see steps 508, 516, 528) and to prevent operation of the sweep mode until 15 seconds after completion of a manual or automatic spout movement (see step 482) which places the spout in the central 25% of the crop-receiving window.

In steps 228—232, a display timer (timer 3) is decremented (230) or reinitialized (232), as directed by step 228, in order to provide a data bit which toggles at a 1—2 Hz rate for use in triggering a flashing display device (not shown). Steps 234—236 decrement a relay delay timer (timer 4) for use in relay diagnostics.

Step 237 determines whether a spout pot error flag has been set, as in step 312. If not, the algorithm proceeds to step 238. However, if yes, then the algorithm is directed to step 237A which decrements a 4 second timer (timer 5), or "spout pot error delayed timer", which is started in step 312. Then, step 237B directs the algorithm to 238 if the timer 5 has not expired, otherwise, the algorithm proceeds to step 237C which sets a "spout pot error delayed flag". Thus, the spout pot error delayed flag" is not set unless a spout pot error flag (set in step 312) is continuously set for 4 seconds.

Step 238 directs the algorithm to step 240 if an undershoot delay timer (timer 6) is running. Otherwise, the algorithm is directed to step 246. The timer 6 preferably has a duration of approximately 1 seocnd and is started when the spout is instructed to stop moving (see step 508). The undershoot delay timer is used to delay recalculation of the right and left undershoot values, UNDR and UNDL, in step 504 until the spout has had enough time to coast to a stop following an automatic spout movement. Step 240 decrements the undershoot delay timer, whereupon in step 246, the hardware timer is reinitialized. After step 246, the manual operation test routine of Fig. 8 is repeated at step 268.

Step 270 clears a multiplexer error flag. Then, steps 272—278 operate to set a multiplexer error flag in step 278 if input pin 4 of multiplexer 72 is not properly grounded, if the voltage on input pin 12 of multiplexer 72 and at the threshold input, Vth, of micro 80, is not 2 volts, or if the voltage at pin 13 of multiplexer 72 is not 5 volts. Otherwise, the algorithm proceeds to step 286. The grounded input (pin 4) of multiplexer 72 and the 5-volt input (pin 13 of multiplexer 72) are chosen such that the address code of one is "all ones" and the address code of the other is "all zeroes". Thus, the address codes corresponding to ground and 5-volts will be incorrect if the addressing mechanism is not working correctly. In this manner, certain self-diagnostic functions are performed. First, the operation of the analog-to-digital converter (part of micro 80) is verified. Second, the operation of the addressing mechanism between micro 80 and multiplexer 72 is tested.

In steps 286 through 292, values are read from the spout calibration potentiometer 74, tongue calibration potentiometer 76, wagon width potentiometer 78 and the tongue position sensor 62. Then, step 294 directs the algorithm to step 302 where a tongue pot error value is set, and then to 303, if the tongue position value, TPTONG, from 292 corresponds to a value which is outside of the 334 degree electrical range of the tongue pot 62. Since the tongue is normally physically prevented from moving to positions beyond 90 degrees of straight back, very low or full scale tongue pot values can be interpreted as being due to a failure of the tongue potentiometer. Otherwise, step 294 directs the algorithm to step 296 where the tongue pot error is cleared. Then, at 298, the tongue position value, TPTONG, (from step 292) is modified by the tongue calibration value according to the statement TPTONG=TPTONG+(TCAL÷8), where TCAL is the tongue calibration value from calibration pot 76. At step 300, if the TPTONG value is greater than +55 degrees or less than −55 degrees, the TPTONG value is set equal to +55 degrees or −55 degrees, respectively. This prevents excessive spout rotation when the tongue is freely swinging or stowed.

The manual operation test routine of Fig. 8 is repeated at step 303. At step 304, a spout angle or position valve, TSPOU, is obtained from spout angle sensor 60. Then, step 306 directs the algorithm to step 338 if the difference between the current and previous signals representing the spout angle is greater than a threshold value which would correspond to a spout angular velocity of, for example, 18 degrees per second. Since the spout normally moves slower than this angular velocity, rapidly changing spout pot values are an indication that the spout has rotated out of the electrically operative or "working" range of the spout pot 60. Thus, step 306 detects when the spout rotates past the electrically operative range of potentiometer 60, which would cause an abrupt change in the signal produced by spout pot 60. In this case, the old spout position value is utilized since the algorithm proceeds directly from step 306 to step 338, thus skipping step 334, where the spout position value would normally be readjusted. Otherwise, the algorithm proceeds to step 308 which directs the algorithm to step 314 if a spout pot error flag has previously been set by step 312. If not, the algorithm proceeds from step 308 to 310. Step 310 directs the algorithm to step 320 if the signal from spout pot 60 is within its 334 degree "working" range. Otherwise, the algorithm proceeds to step 312. Thus, step 312 sets a spout pot error flag and starts the spout pot error delay timer running if the signal from spout pot 60 is outside the 334 degree "working" range. After step 312, the algorithm proceeds to step 328.

Step 320 directs the algorithm to step 328 if a wrap error flag has been set (by step 324). Otherwise, the algorithm proceeds to step 322 where a PREHEM value is stored to indicate whether the spout pot 60 was last in the high half of its resistance range or in the low half of its resistance range. After 322, the algorithm proceeds to step 328.

If step 308 directs the algorithm to step 314, then step 314 determines if the sensed spout pot 60 is within the 334 degree "working" range. If not, the algorithm proceeds to step 328. If so, it means that the spout pot 60 has returned to a position within the 334 degree working range, and the algorithm proceeds to step 316 which determines whether the signal from spout pot 60 corresponds to a spout pot position within the same hemisphere which it was previously within. If not, it is indicated that the spout has continued rotating out of one hemisphere of the working range of the spout pot 60 and then back into the other hemisphere without passing through the spout centered position, and then a wrap error flag is set in step 324. If yes, it means that the spout pot 60 has re-entered the working range in the same hemisphere in which it left the range by reversing its direction of rotation, whereupon the wrap error flag is cleared in step 318. After steps 324 or 318, the spout pot error and the spout pot error delayed flags are cleared in step 326. Thus, by keeping track of whether the spout is within its 344 degree working range and of which hemisphere spout pot 60 is in, the control system can determine when the operator has manually moved the spout 14 outside of its normal centered 140 degree working range and will return spout 14 toward the crop-receiving wagon in the proper direction.

Step 328 determines whether a wrap error or a spout pot error flag has been set. If yes, it means that the spout pot 60 is either not within its working range or has wrapped around from one hemisphere to the other without going through the spout centered position and the algorithm proceeds to step 330. Step 330 determines if the spout was previously in the right hemisphere. If so, the spout 14 must now be beyond 70 degrees right of center and step 336 sets the actual spout position value, TSPOU, to a value corresponding to a spout position at the end of the electrical range of the spout pot 60 (spout 14 is 70 degrees right of center). If not, spout 14 must now be beyond 70 degrees left of center and step 332 sets the actual spout position value, TSPOU, to a value corresponding to a spout position at the end of the electrical range of the spout pot 60 (spout 14 is 70 degrees left of center). Thus, one of the spout position values set in steps 332 or 336 is used whenever the spout has "wrapped around", and a wrap error flag is set in step 328. However, if there is no wrap error, as is the case during normal operation, then step 328 directs the algorithm to step 334 where the actual spout position value, TSPOU, is adjusted according to the statement: TSPOU=TSPOU+(SCAL÷8), where SCAL is the spout calibration value from spout calibration potentiometer 74.

If step 306 detects that the signal spout pot 60 was changing faster than a certain rate due to rotating of the spout out of the electrical range of the spout pot 60 or due to an electrical failure of the spout pot 60, then the algorithm is directed directly to step 338, the spout position value is not updated or adjusted by steps 332, 334, or 336 and the rest of the algorithm operates with the previous spout position value.

It should be noted that during normal operation, (when the spout neither moves too fast nor wraps around, nor remains outside of the 140 degree working range), the algorithm will proceed through steps 306, 308, 310, 320, 322 and 328 to step 334, where the sensed spout position value, TSPOU, is recalculated.

After steps 332, 334 and 336, or from step 306, the algorithm proceeds to step 338 which determines whether the relay delay timer (described with reference to previous steps 234 and 236) is running. If yes, it means that not sufficient time has expired to allow signals to return to relay sensing inputs P04 and P05 of the micro 80, and the algorithm skips ahead to step 344. If not, then it means that relay status signals should have been received by micro inputs P04 and P05 and the algorithm is directed to step 340.

Steps 340—346 check the activation of relays 90 and 92 by comparing the signals at micro output command ports P10 and P11 with the signals at micro relay sense ports P04 and P05 and by generating or clearing a relay error flag according to the following rules.

A relay error flag is set in step 346 only when either port P10 or P11 is low and the corresponding port P04 or P05 is low; otherwise, the relay error flag is cleared in step 344. This provides an indication that a relay activation signal was generated, but that due to some failure, the corresponding relay was not energized. At the same time, a relay sense signal caused by a manual spout-moving operation is not interpreted as a failure.

The manual test routine of Fig. 8 is repeated at step 347.

Next, step 348 determines whether the multiplexer error flag was set in step 278 or the relay error flag was set in step 346. If yes, then the algorithm proceeds to steps 362—366 which operate over successive cycles of the routine to alternately flash the spout and tongue indicator lights 105—108. The lights 105—108 are flashed in response to the changing of a bit which is controlled by timer 3 (see steps 228—232). After steps 364 or 366, the algorithm proceeds to step 374. If no relay or multiplexer error flags have been set, then step 348 directs the algorithm to step 350.

Step 350 determines if a spout pot error flag has been set by step 312. If so, then both the left and right spout lights 105 and 106 are turned on by step 354 to indicate this condition to the operator. If not, then step 352 turns on one of the left or right spout lights if the spout 14 is left or right, respectively, of its centered position. Step 352 will turn both spout lights off if the spout is centered.

Step 356 determines whether a tongue pot error flag has been set by previous step 302. If so, then both tongue lights 107 and 108 are turned on by step 360 to indicate this condition to the operator. If not, then step 358 turns on either the left or the right tongue light if the tongue 16 is left or right, respectively, of its centered position. Step 358 will turn both tongue lights off if the tongue is centered.

In step 374, a "WORK" or "scratchpad" value is set equal to the absolute value of the angle of the tongue 16 with respect to its centered position. Then, step 376 compares the WORK value to a wide tongue angle threshold value, WIDE, of 12 degrees, for example. If WORK is greater than WIDE, then it means that the forage harvester and wagon are in a turn and the algorithm is directed to step 384 which starts the turn delay timer (timer 1). The turn delay timer is used to measure a predetermined time period and is repeatedly started by step 384 as long as the vehicles remain in the turn so that the turn delay timer will not expire until a predetermined time after the vehicles have come out of the turn. If WORK is not greater than WIDE, then it means that the vehicles are not in a turn and the algorithm proceeds to step 378. If the turn delay timer is still running, then step 378 directs the algorithm to step 386 which sets the hysteresis flag. Thus, the hysteresis flag is set in step 386 so that step 406 will cause a skip ahead to step 414 and will maintain the spout in the more closely tongue aligned position until a predetermined time after the vehicles have come out of a turn.

If the turn delay timer is not running, then step 378 directs the algorithm to step 380, which determines whether the WORK value is greater than a narrow tongue angle threshold value, NARROW, such as 9 degrees. If yes, it means that the vehicles are still in a turn and the algorithm skips ahead to step 387. If not, it means that the vehicles have come out of a turn and the hysteresis flag is cleared and a power-up (PWRUP) flag is set at step 382 for use in later described step 496.

In step 387, the manual operation test routine Fig. 8 is repeated.

In step 388, a desired spout position value, SPOUTN, is calculated as a function of the sensed tongue position by the equation:

$$SPOUTN=M1\times TPTONG+B1,$$

wherein M1=.805, TPTONG is the tongue position value (from sensor 62) and B1=0. This SPOUTN value in 388 is continuously updated and stored in a first desired spout position value register (not shown). These "M" and "B" values, and the ones which follow, are only exemplary and would vary for different vehicles.

In step 390, the manual operation test routine of Fig. 8 is repeated.

Then, in step 400, the WORK value is again set equal to the magnitude of the distance between the actual tongue position, TPTONG, and the center tongue position.

Then, in step 402, a spout position limit value, DLIMIT, is calculated from the equation:

$$DLIMIT=(M2\times WORK)+B2,$$

where M2=0.0 and B2=4.0. The DLMIT value is added to and subtracted from the desired spout position value in steps 418 and 420 to provide the upper and lower limit values of a narrow target range of permitted spout positions about the desired position.

Then, in step 404, a decreased manual range value, DFMO (for use if the spout is under manual control) is calculated from the equation:

$$DFMO=(M4\times WORK)+B4,$$

where M4=.083 and B4=19.

Then, step 406 determines whether the hysteresis flag was set (as in step 386) to indicate that the vehicles are turning. If so, the algorithm is directed to step 414. If not, the algorithm proceeds to step 408 where a maximum wide range value, ALIMIT is calculated by the equation:

$$ALIMIT=M3\times WORK+B3,$$

where M3=.083 and B3=22 are factors related to the geometry of the machine system.

Next, in step 410, the maximum wide range value, ALIMIT, is scaled as a function of the wagon window size, as represented by the setting of wagon width potentiometer 78, according to the equation:

$$ALIMIT=(TPWDT\times ALIMIT)-256,$$

where TPWDT is a value representing the wagon width provided by wagon width potentiometer 78. TPWDT has a range of 0 to 255 so that ALIMIT is scaled by between 0 and 1. Thus, all values derived from the ALIMIT value in step 410 can be modified or scaled by adjusting the wagon width potentiometer 78.

Then, step 412 sets the DLIMIT value equal to the larger of the spout position limit value, DLIMIT, and of the maximum wide range value, ALIMIT.

Then, steps 414 and 416 cause the DLIMIT value to be decreased by the DFMO value if the spout is under manual control. Otherwise, the algorithm proceeds from step 414 to 418. This DLIMIT value from step 402, 412 or 416 is then added to and subtracted from the desired or nominal spout position value, SPOUTN, to provide high and low spout position range end point values, LIMHI and LIMLO, in steps 418 and 420, respectively. These LIMHI and LIMLO values represent the edges of a wagon-defined, crop-receiving, spout-position range. Thus, steps 388—420 establish a target range of spout positions centered about a nominal or desired position. The width of this target range depends upon the wagon width, upon whether the spout is under automatic or manual control, and upon whether the vehicle is turning or has recently completed a turn.

Thus, when the forage harvester is not in a turn, no automatic spout position correction is made until the spout position deviates from the tongue by at least +22 degrees. This +22 degree range is represented by the LIMHI and LIMLO values in steps 418 and 420, using the wide range ALIMIT value set in steps 408 and 410, unmodified by step 416. This 22 degree value results from the B3=22 value in step 408. The spout is then repositioned to a desired position represented by the TARGET value in steps 428 or 430, due to operation of steps 490—514.

However, when the forage harvester is in a turn, a spout position correction will be made when the spout position deviates from the tongue by only 4 degrees. This narrower 4 degree range is represented by the LIMHI and LIMLO values in steps 418 and 420 using the DLIMIT value from step 402, *without* modification in steps 408—412. The 4 degree value results from the B2=4 value in step 402. This is because step 406 causes steps 408—412 to be bypassed when the forage harvester is in a turn.

Similarly, after the spout is manually moved, no automatic spout position correction will be made unless the spout position deviates from the tongue by 19 degrees. This is because the LIMHI and LIMLO values in step 418 and 420 will be derived using the modified ALIMIT value of step 416 when under manual control. The 19 degree value results from the B4=19 value in step 404. Furthermore, because of steps 440—482, the spout will be repositioned only to just within this +19 degree range, rather than to the closely tongue-aligned TARGET position. This permits the operator to manually position the spout to one side or the other without having the spout automatically repositioned back to the closely tongue-aligned position represented by the TARGET value. This is useful during windy or side-hill conditions.

Step 422 then determines whether the sweep mode flag is set to indicate that the spout position sweep mode (wherein the spout is automatically and sequentially moved through a series of positions) is active. If not, the algorithm proceeds to step 424. If yes, the algorithm proceeds to a routine represented by step 423 and shown in detail in Fig. 5, wherein the desired spout position value, SPOUTN, is predetermined to correspond to the next sweep mode position.

Referring now to Fig. 5, first the contents, N, of a modulo five software sweep step counter (which is decremented in step 504 of the main algorithm) is examined in step 540. Then, depending upon the sweep step counter value, N, the next desired spout position value, SPOUTN, is established in the corresponding one of steps 550—554. For example, if N=0, then the algorithm proceeds to step 424 using the previously established SPOUTN value. If N=1, 2, 3, or 4, then differential values d1 or d2 are added or subtracted to obtain the new desired SPOUTN value. The differential values d1 and d2 are defined as follows:

$$d1=(DLIMIT-DFMO)\times 3/4$$

$$d2=(DLIMIT-DFMO)\times 3/8.$$

In this manner, in the sweep mode, the SPOUTN value will assume one of five different values, one representing a spout position substantially centered with respect to the wagon tongue and the others representing a pair of spaced-apart positions arranged on either side of the centered position. The d1 and d2 values are chosen so that the spout sweep mode positions will typically be spaced approximately 7 and 15 degrees on either side of the spout centered position. It should be noted that this exemplary spacing will be varied in response to adjustment of the wagon width potentiometer 78 due to the operation of steps 410 and 412. Note also that as the sweep mode counter value N is decremented, the spout positions will alternate from the left and right sides of its centered position, as illustrated in Fig. 6.

Returning now to Fig. 41, step 424 determines whether the spout is being moved automatically by the micro 80. If yes, the algorithm proceeds to step 425 which directs the algorithm to 430 if the spout is moving to the left, otherwise, to step 428. If the answer in 424 is no, then the algorithm is directed to step 426.

In step 426, a current sensed or actual spout position value, TSPOU, which is derived from the spout position potentiometer 60, is compared to the desired spout position value, SPOUTN. If TPSPOU is greater than SPOUTN, then 426 directs the algorithm to step 430, otherwise, to step 428. Thus, depending upon whether the spout 14 is approaching its desired position from the right or from the left, a TARGET value is calculated in step 428 or 430, respectively, wherein right and left undershoot values, UNDR and UNDL, (equal to one-fourth of the values determined in step 504) is subtracted from or added to the SPOUTN value, respectively. Thus, the SPOUTN value is modified by an undershoot factor which is chosen so that if the spout moving relays 90 or 92 are turned off when the spout 14 reaches the position represented by the TARGET value, then the inertia of the spout 14 will carry it just to the desired spout position represented by the SPOUTN value.

Step 432 determines whether any "fatal" error flags have been set in steps 302, 237C or 278. If yes, then the algorithm proceeds to step 438, otherwise the algorithm is directed to step 440. Step 438 turns off the relays 90—94 and returns the algorithm to the "main loop start" at step 217.

At this point, it is appropriate to summarize the operation of this system with respect to spout pot and wrap-around errors. When spout moves out of electrical range of the spout pot 60, both spout lights are turned on in step 354 due to the operation of steps 310, 312 and 350. If the spout pot error flag (set in 312) is not cleared before expiration of the spout pot error delay timer (started in step 312), then all relays are turned off due to the operation of steps 237C, 432 and 438. However, under the normal manually-induced wrap-around situation, the spout pot error flag will be cleared in step 326 before the spout pot error delay timer can expire, and step 432 will prevent step 438 from forcing the relays off. Note that the display is immediately controlled by the spout pot error flag. However, the relays are controlled by steps 432 and 438 in response to the spout pot error delayed flag.

Step 440 determines if a manual flag was set by any of the manual test routines in response to a manual activation of switch 51. If not, the algorithm proceeds to steps 490—514 which define an automatic operational stragegy, otherwise the algorithm proceeds to steps 442—486 which define a manual operational strategy.

In the manual strategy algorithm portion, step 442 determines whether the spout is moving in response to manual actuation of switch 51 or whether the spout is moving in response to command signals generated at outputs P10 or P11 of micro 80. If micro outputs P10 and P11 are not causing the spout movement, then the algorithm is directed to step 444 (Fig. 4n) which determines whether an "AUTO2" flag has been set, as by step 460 immediately following termination of manual activation of switch 51. If the "AUTO2" flag is not set, the algorithm proceeds to step 446 which determines whether switch 51 is still engaged (as indicated by the presence of a relay sense signal at relay sense input P04 or P05). If yes, step 446 directs the algorithm back to the main loop start at 217 so that the manual movement of the spout via switch 51 may continue. If no, then it means that the operator has ended actuation of switch 51 and step 446 directs the algorithm to a "check limit" represented by 448 and which will be described later with reference to Fig. 7. Briefly, this routine generates a "stop" command if the spout is positioned within a wagon crop-receiving range of positions. Routine 448 will also generate "move left" or "move right" commands, depending upon which way the spout must be moved to return to this crop-receiving range. If the spout is outside the crop-receiving range, then the command will be "move left" or "move right", and step 450 will direct the algorithm to step 452 which clears a "MANTOU" flag and sets the "AUTO2" flag. However, if the command generated by the routine of 448 is "stop", it means that the spout was manually moved, but not out of the crop-receiving range, and the algorithm is directed by step 450 to step 460. Step 460 sets the "AUTO2" flag, starts the undershoot delay timer and starts the sweep mode delay timer.

After step 452, then step 454 determines whether the spout is out of the crop-receiving range by more than a certain distance. This certain distance is preferably defined as a distance represented by the sum of the distances represented by the LIMHI or LIMLO values and the undershoot values, UNDR or UNDL. If the spout position is out of the crop-receiving range by more than this certain distance, then this is defined as a "long move" situation and step 454 directs the algorithm to step 456 where this situation is indicated by the setting of the "MANTOU" flag. Otherwise, the algorithm proceeds directly to step 458 which starts the relay delay timer, after which the algorithm returns to step 217. The relay delay timer is started so that step 338 will prevent checking of the relays (by step 340) during future executions of the algorithm while the spout is starting to move.

Returning to step 444, if the AUTO2 flag was set (as will be done by step 460 upon termination of a manual activation of switch 51), then the algorithm is directed to step 462. Step 462 determines whether the MANTOU flag was set, (indicating a "long move" situation). If yes, the algorithm proceeds to step 464 where the limit values LIMHI and LIMLO are adjusted by their corresponding undershoot values. Otherwise, the algorithm proceeds directly to step 466 which again performs the routine referred to by previously described step 448 and described in detail with respect to Fig. 7. After the appropriate spout movement commands are generated at step 466, then step 468 determines whether the spout is moving. If yes, the algorithm returns to step 217 while the spout movement continues. Once the spout has stopped moving, after termination of manual activation of switch 51, the algorithm proceeds to step 470 which determines if the undershoot delay timer (started in step 460) has expired. If not, the algorithm returns to step 217. In this manner, the undershoot delay timer prevents updating of the undershoot values until 1 second after termination of an automatic spout movement, and delays reexamination of the spout position by the automatic operating strategy until the spout has had time to come to rest after a manual movement. This allows for the spout to be automatically brought back into the crop-receiving "window" when the manual switch is released when the spout is just within the "window", but the spout inertia carries it out of the "window". If yes, the algorithm proceeds to step 472 which clears the MANUAL, MANTOU and AUTO2 flags to indicate the termination of a manual spout movement and the absence of a "long move" situation. After 472, the algorithm returns to step 217.

Returning now to step 442 (Fig. 4m), if the micro is moving the spout (such as when the spout is automatically moved back into the crop-receiving range after a manual movement of the spout out of that range), then step 442 directs the algorithm to step 474 which determines whether the MANTOU flag is set. If yes, it means that a "long move" situation exists and the algorithm proceeds to step 476 where the LIMHI and LIMLO values are adjusted by the undershoot values. Otherwise, step 474 directs the algorithm directly to step 478. Step 478 is identical to the routine illustrated in Fig. 7 except that step 710 (output commands) of this routine is eliminated from the routine performed at step 478. Then, step 480 performs the same determination which was previously described with respect to step 450 so that if "move right" or "move left" commands result from step 478, then the algorithm is returned to step 217. Otherwise, the algorithm proceeds to step 482 where a stop movement command is generated, the relay delay timer is started to prevent the erroneous detection of manual operation in step 802, the undershoot delay timer is started to prevent the initiation of an automatic spout movement until the spout has stopped coasting, and the sweep mode delay timer is started (to prevent sweep mode operation until a certain time after termination of a manual spout movement). After step 482, the algorithm returns to step 217.

This manual control portion of the algorithm assures that the spout remains in or will be returned to the wagon crop-receiving range of positions after termination of manual spout movement via switch 51.

Returning now to step 440 (Fig. 41), if the manual flag was not set, then the algorithm is directed to the automatic operating strategy portion of the algorithm of steps 490—514 (Figs. 4o and 4p). Step 490 directs the algorithm to step 492 if the AUTO flag is set. Step 492 determines whether the AUTO2 flag has been set (as in step 508). If yes, the algorithm proceeds to 494, otherwise to 506. Step 494 determines whether the undershoot delay timer is running. If yes, the algorithm is directed to step 496 which determines whether the PWRUP flag is cleared. Since the PWRUP flag is initially cleared upon start-up and is not set in step 382 until the turn delay timer has expired, step 496 will prevent automatic spout movement upon start-up until the undershoot delay time has expired (494) and the undershoot values are updated at step 504. If the PWRUP flag has been set (as at step 382), then the algorithm proceeds to step 498 where the LIMHI and LIMLO values are modified by the undershoot values UNDR and UNDL. Then, in step 499, the check limit routine consisting of steps 700—708 of Fig. 7 is executed. Then, in step 500, if a "stop movement" command is generated in step 499, step 500 returns the algorithm to step 217. If a "move right" or "move left" command is generated, then the algorithm proceeds to step 502. Step 502 outputs the generated move command to the micro output P10 or P11 so that the desired automatic spout movement is performed. Step 502 also clears the AUTO2 flag, clears the undershoot delay timer (so that a new undershoot value will not be calculated until the spout stops moving) and starts the relay delay timer (to prevent checking of relay sense inputs P04 and P05 until a short time after spout movement has started. After 502, the algorithm returns to step 217.

Now, returning to step 494, if the undershoot delay timer has expired, then the algorithm is directed to step 504 where the AUTO and AUTO2 flags are cleared, the sweep step counter value is advanced and the undershoot values UNDR and UNDL are updated as follows:

$$UNDR=UNDR+(SPOUTN-TPSPOU)$$

and

$$UNDL=UNDL+(TPSPOU-SPOUTN),$$

where the SPOUTN values are the values stored by step 508 in a second desired spout position register. These undershoot values, UNDR and UNDL, are used in previously described steps 428 and 430 to calculate the spout position targets.

Thus, the undershoot values are not updated in step 504 until step 494 has determined that the undershoot delay timer (1 sec) has expired. After 504, the algorithm returns to 217.

Returning now to step 492, if the AUTO2 flag has been cleared (as in steps 502 or 504), then step 492 will direct the algorithm to step 506 which determines whether the spout has gone past the target position represented by the TARGET values of steps 428 and 430. If no, the algorithm returns to step 217. If yes, the algorithm proceeds to step 508 which: a) generates a "stop movement" command, b) stores the current desired spout position value, SPOUTN, in a second register (separate from the first register which contains the SPOUTN value from step 388) for use in determining the undershoot values in step 504, c) starts the undershoot delay timer, d) starts the sweep mode delay timer, e) sets the AUTO2 flag, and f) starts the relay delay timer. After 508, the algorithm returns to step 217.

Returning now to step 490, if the AUTO flag is not set (as when cleared in step 504), then step 490 directs the algorithm to step 510 which again executes steps 700—708 of the check limit routine of Fig. 7. If a "move right" or "move left" command is generated, then step 512 directs the algorithm to step 514. Step 514: a) outputs the movement command to micro outputs P10 or P11, b) sets the AUTO flag, c) clears the undershoot delay timer, d) starts the relay delay timer, and e) clears the sweep mode flag. After step 514, the algorithm returns to step 217. If in step 512, the movement command was "stop", then step 512 directs the algorithm to steps 516—526 (Fig. 4p). Steps 516—526 determine whether the sweep delay timer is running, whether the hysteresis flag is set (to prevent sweep mode operation when in a turn), whether the sweep mode switch 104 is open, and whether the sweep mode flag is set (as in 526). If the result of any of the determinations of steps 516—520 is yes, then the algorithm is directed to step 217 and no spout movement is begun. However, if the results of 516—520 are all no, then the algorithm proceeds to 522 which directs the algorithm to 524 if the sweep mode flag is not set. Step 524 prevents the sweep mode flag from being set in step 526 unless the spout is positioned within the central 25% of its wagon crop-receiving range of positions. This prevents the spout from sweeping when the operator manually moves the spout to a position outside of this central 25% in order to fill a wagon while compensating for a side hill or for a cross wind. Once the condition of 524 is met, then the sweep mode flag will be set in 526 and the next time through, step 522 will direct the algorithm to step 528, which causes the spout to be moved toward its next sweep mode target position, as determined by steps 423, 428 and 430. Step 528 also restarts the sweep mode delay timer and sets the auto movement flag. After steps 526 and 528, the algorithm returns to step 217.

Referring now to Fig. 7, the check limit and command generating routine begins at step 700 which determines whether the sensed spout position value, TSPOU, is greater than the spout position range end point value, LIMHI. If yes, the routine proceeds to steps 704 and 710 which cause the generation and output of a "move right" command signal which will activate relay 90 and move the spout 14 to the right. If not, then the routine proceeds to step 702 which determines if the sensed spout-position value, TSPOU, is less than the spout position range end point value, LIMLO. If yes, the routine proceeds to steps 706 and 710 which cause the generation and output of a "move left" command signal which will activate relay 92 and move the spout 14 to the left. If not, then the routine is directed to steps 708 and 710 which cause the generation and output of "stop" command signals which turn both relays 90 and 92 off and thus stop movement of the spout 14.

In this manner, this routine generates command signals which will cause the spout 14 to move toward the wagon crop-receiving range of spout positions (represented by LIMHI and LIMLO) after the operator has completed a manual movement of the spout 14 outside of this range by use of a switch 51. Thus, when the forage harvester is going through a thistle patch, the operator may manually move the spout outside of the wagon crop-receiving range of positions by using switch 51. Then, when switch 51 is de-activated, the spout 14 will be returned to the edge of the crop-receiving range in response to the command signals generated by steps 448 or 466.

Referring now to Fig. 8, the manual test routine begins at 802 wherein the signals at micro relay sense inputs P04 and P05 are compared to the signals at control outputs P10 or P11 to determine if a signal is present at lines 66 or 68 without an actuation signal being present at the corresponding control output. If so, this is interpreted as a manual operation via switch module 50 and step 804 directs the routine to step 806. If not, it means that a manual operation has not been performed and step 804 directs the routine to return to the main algorithm. Note that if relay 90 or 92 was recently de-activated (as indicated by the relay delay timer still running), then the appropriate left or right signal which might be present is not treated as a manual input.

In step 806, the following operations are performed: the P10 and P11 control outputs are turned off to prevent automatic movement of the spout 14; a manual operation flag is set; an automatic flag and a sweep mode flag are cleared; the sweep delay timer is reset; the turn delay timer is cleared; and the undershoot delay timer is cleared. The routine then returns to the main algorithm so that the manual control of the spout can continue without interference.

Turning now to Figs. 10—14, the magnetic pickup-related control algorithm illustrated therein operates in conjunction with a main spout control algorithm (not shown). Briefly, this main control algorithm controls the aiming of the spout as a function of sensed spout and wagon tongue positions. The main control algorithm includes a sweep mode delay timer which prevents movement of the spout to the next sweep mode position unless the sweep mode delay timer has timed out.

The mag pickup algorithm of Figs. 10—12 and 14 is preferably performed after step 218 or step 246 and immediately prior to step 268 of the main spout control algorithm. The mag pickup algorithm of Fig. 13 is preferably performed after step 348 of the main spout control algorithm and returns to either step 350 or 374 of the main algorithm.

It should be further pointed out that it is also preferable for a software counter value, designated MBSTEP, to be decremented at step 230 (not shown) of the main spout control algorithm. This periodically changes the value of MBSTEP at a desired rate so that step 1102 of the mag pickup algorithm will cause the indicator lights 105—108 to be sequentially lighted.

Turning now to Fig. 10, step 1000 initially sets a software "timeout" counter to a value which is chosen so the timeout counter will periodically time out at a 20 Hz rate. Then, step 1002 determines if the mag pickup voltage (the output of the built-in comparator) is high. If yes, the algorithm skips ahead to step 1034. If not, the algorithm proceeds to step 1004 which again examines the mag pickup voltage. If this voltage is now high, it means that a low-to-high transition has occurred and the algorithm proceeds to step 1006. Otherwise, the algorithm is directed to step 1020.

At step 1006, the timeout counter is reinitialized, then step 1008 determines whether the mag pickup signal is low. If the signal is low, the algorithm proceeds to step 1010; else, to step 1016. Step 1010 again determines if the mag pickup signal is high. If yes, it means that the signal has a frequency which is greater than 50 Hz (corresponding to a feed roll rotation rate which is greater than approximately one-half of the rated rpm of the forage harvester P.T.O.) and the algorithm is directed to step 1060. If no, the algorithm proceeds to step 1012 which decrements the timeout counter. Then, step 1014 examines the timeout counter value and directs the algorithm back to step 1010 if the timeout counter value is not zero. If the timeout counter value equals zero, this indicates a mag pickup signal frequency of less than 50 Hz and the algorithm is directed to step 1062.

Returning to 1008, if the mag pickup signal is not low, then the algorithm proceeds to step 1016 which also decrements the timeout counter. Then, 1018 examines the timeout counter value and directs the algorithm back to step 1008 or to step 1062 (which indicates a mag pickup signal frequency of less than 50 Hz).

Returning to step 1004, if the pickup signal is not high, then the algorithm proceeds to steps 1020 and 1022. Steps 1020 and 1022 operate to return the algorithm to step 1004 or else, to step 1064 which indicates no or very slow rotation of the feed rolls.

In short, steps 1002 to 1022 determine whether the frequency of the mag pickup signal is greater than or less than 50 Hz or zero, in the case where the mag pickup signal (at the output of the built-in comparator) initially makes a low-to-high transition.

Turning to Fig. 11, steps 1034 to 1052 make the same determination as steps 1002—1022, except for the case where the mag pickup signal initially makes a high-to-low transition. In particular, step 1040 directs the algorithm to step 1060 if the frequency is greater than 50 Hz, steps 1044 and 1048 direct the algorithm to step 1062 if the frequency is less than 50 Hz and step 1052 directs the algorithm to step 1064 if the frequency is zero or very low.

Turning now to Fig. 12, step 1060 clears an MBROKE flag, sets a shift bit equal to 0 and executes a shift subroutine which will now be described with reference to Fig. 14.

The shift subroutine of Fig. 14 is entered at 1202. Then, at step 1204, the shift bit is shifted into an 8-bit mag pickup filter (or register) which is integral to the microprocessor and therefore, not shown. Next, step 1206 determines if all 8 bits of the mag pickup filter are 1s. If not, the routine is directed to step 1210. If yes, it means that at least 8 consecutive shift bits have indicated a zero Hz or no feed roll rotation condition, and the routine is directed to step 1208 which restarts the sweep mode delay time of the main spout control algorithm. As long as the mag pickup filter contains all 1s, then the sweep mode delay timer will be continuously restarted and sweep mode operation will be prevented under this no feed roll rotation condition. However, if a 0 has been shifted into the mag pickup filter, as via step 1060, then the subroutine will proceed directly to step 1210 which causes a return to the algorithm of Fig. 12 without restarting of the sweep mode delay time.

Returning now to Fig. 12, step 1062 clears the MBROKE flag, sets the shift bit equal to 1 and again executes the shift bit subroutine of Fig. 14. After steps 1060 or 1062, the algorithm proceeds to step 268 of the main spout control algorithm.

Step 1064, which is entered when there is no feed roll rotation, sets the shift bit equal to 1 and executes the shift bit subroutine of Fig. 14. After step 1064, step 1066 determines whether the voltage at micro input AN1 is greater than a threshold voltage of .75 volts. If yes, it means that the mag pickup 65 has an open circuit and the algorithm is directed to step 1070 which sets the MBROKE flag. If not, it means that the mag pickup 65 does not have an open circuit and the algorithm proceeds to step 1068 which clears the MBROKE flag. After steps 1068 and 1070, the algorithm again returns to step 268 of the main spout control algorithm.

Turning now to Fig. 13, step 1100, which is preferably entered after step 348 (in its "NO" branch) of the main spout control algorithm, determines whether the MBROKE flag has been set. If yes, the algorithm proceeds to step 1102 which causes only a particular one of the indicator lights 105—108 to be turned on, depending upon the MBSTEP counter value which was incremented in main spout control algorithm step 232, as previously described. This causes the indicator lights to be sequentially turned on whenever the MBROKE flag indicates that the mag pickup has an open circuit. After 1102, the algorithm returns to step 374 of the main spout control algorithm. On the other hand, if there is no mag pickup open circuit condition, the MBROKE flag will not be set and step 1100 will direct the algorithm to step 350 of the main spout control algorithm.

The conversion of the above-described flow chart into a standard language for implementing the algorithm described by the flow chart in a digital data processor, such as a microprocessor, will be evident to those with ordinary skill in the art.

While the invention has been described in conjunction with a specific embodiment, it is to be understood that many alternatives, modifications, and variations falling within the scope of the appended claims will be apparent to those skilled in the art in light of the aforegoing description. For example, the control system described herein could be adapted to control the discharge spout on any agricultural machine with an attached collector vehicle or with a non-attached collector vehicle using a non-mechanical collector vehicle position sensor.

**Claims**

1. A forage harvester having a movable spout (14) for directing crop into a receiving vehicle, powered feed rolls for propelling the crop into the spout, and a control unit (64) controlling a spout-positioning mechanism (24) so as to cause the spout to sweep automatically from side to side and spread the crop in the receiving vehicle, characterised by a sensing device (65) sensing whether the feed rolls are rotating above a threshold speed of rotation and providing a signal (T1) to the control unit (64) to prevent the automatic sweeping of the spout when the feed rolls are not rotating above a threshold speed of rotation.

2. A forage harvester according to claim 1, characterised in that the control unit (64) comprises a sweep mode timer which times out after a predetermined time period, in that automatic sweeping is disabled so long as the timer has not timed out and in that the sensing device (65) periodically restarts the timer when the feed rolls are not rotating above the threshold speed of rotation.

3. A forage harvester according to claim 1 or 2, characterised by means (120) for generating a warning signal (ANI) in response to failure of the sensing device (65).

4. A forage harvester according to claim 3, wherein the sensing device (65) comprises a magnetic pick-up with an inductive coil, characterised in that the warning means (120) apply a DC bias voltage to the coil and in that the warning signal (ANI) is derived from the voltage across the coil.

5. A forage harvester according to claim 3 or 4, characterised in that the warning means (120) cause a warning to be given (105—108) to the operator and in that this warning is inhibited when the feed rolls are not rotating above the threshold speed of rotation.

6. A forage harvester according to any of claims 1 to 5, characterised in that the sensor (65) comprises a magnetic pickup which generates a pickup signal (T1) having zero transitions at intervals determined by the speed of rotation of the feed rolls.

7. A forage harvester according to claim 6, characterised in that the control unit (64) measures the said intervals and sets a data bit to first and second values when the interval is respectively shorter and longer than a threshold value, in that the control unit shifts the data bits into a multi-bit shift register and in that the automatic sweeping is disabled when all bits in the shift register have the second value.

**Patentansprüche**

1. Futtererntemaschine mit einem beweglichen Auswurfstutzen (14), um das Erntegut in ein aufnehmendes Fahrzeug zu leiten, mit kraftgetriebenen Zuführungsrollen, um das Erntegut in den Stutzen zu treiben, und mit einer Kontrolleinheit (64), welche einen Stutzenstellmechanismus (24) steuert, so daß der Stutzen veranlaßt wird, automatisch von einer Seite zur anderen zu streichen und das Erntegut in dem aufnehmenden Fahrzeug auszubreiten, gekennzeichnet durch eine Fühlvorrichtung (65), welche fühlt, ob die Zuführungsrollen oberhalb einer Grenzdrehgeschwindigkeit rotieren, und ein Signal (T1) der Kontrolleinheit (64) liefert, um die automatische Streichbewegung des Stutzens zu verhindern, wenn die Zuführungsrollen nicht oberhalb einer Grenzdrehgeschwindigkeit rotieren.

2. Futtererntemaschine nach Anspruch 1, dadurch gekennzeichnet, daß die Kontrolleinheit (64) einen Streichmoduszeitgeber aufweist, der nach einer vorbestimmten Zeitperiode ausläuft, und daß die automatische Streichbewegung so lange unmöglich gemacht wird so lange der Zeitgeber nicht ausgelaufen ist, und daß die Fühlvorrichtung (65) den Zeitgeber periodisch neu startet, wenn die Zuführungsrollen nicht oberhalb der Grenddrehgeschwindigkeit rotieren.

3. Futtererntemaschine nach Anspruch 1 oder 2, gekennzeichnet durch Mittel (120) zum Erzeugen eines Warnsignals (ANI) in Abhängigkeit von einem Versagen der Fühlvorrichtung (65).

4. Futtererntemaschine nach Anspruch 3, bei der die Fühlvorrichtung (65) einen magnetischen Aufnehmer mit einer induktiven Wicklung aufweist, dadurch gekennzeichnet, daß die Warnmittel (120) eine Gleichstromvorspannung an die Wicklung anlegen und daß das Warnsignal (ANI) von der Spannung über die Wicklung abgeleitet wird.

5. Futtererntemaschine nach Anspruch 3 oder 4, dadurch gekennzeichnet, daß die Warnmittel (210) veranlassen, daß eine Warnung der Bedienungsperson gegeben wird (105 bis 108), und daß diese Warnung verhindert wird, wenn die Zuführungsrollen nicht oberhalb der Grenzdrehgeschwindigkeit rotieren.

6. Futtererntemaschine nach irgend einem der Ansprüche 1 bis 5, dadurch gekennzeichnet, daß der Fühler (65) einen magnetischen Aufnehmer aufweist, der ein Aufnehmersignal (T1) erzeugt, das Nullübergänge bei Intervallen aufweist, die durch die Drehgeschwindigkeit der Zuführungsrollen bestimmt werden.

7. Futtererntemaschine nach Anspruch 6, dadurch gekennzeichnet, daß die Kontrolleinheit (64) die genannten Intervalle mißt und ein Datenbit auf erste und zweite Werte einstellt, wenn das Intervall jeweils kürzer bzw. länger als ein Grenzwert ist, daß die Kontrolleinheit die Datenbits in ein Multibit-Schieberegister leitet und daß die automatische Streichbewegung ausgesetzt wird, wenn alle Bits im Schieberegister den zweiten Wert annehmen.

**Revendications**

1. Faucheuse-chargeuse comportant une goulette mobile (14) pour diriger le produit récolté vers un véhicule récepteur, des rouleaux d'alimentation entraînés pour assurer la progression de la récolte dans la goulette, et un ensemble de commande (64) commandant un mécanisme (24) de positionnement de la goulette de façon à ce que la goulotte effectue un mouvement automatique de balayage d'un côté à l'autre et répartisse la récolte dans le véhicule récepteur, caractérisée par un dispositif détecteur (65) qui détecte si les rouleaux d'alimentation tournent à une vitesse supérieure à une vitesse de rotation de seuil et qui fournit un signal (T1) à l'ensemble de commande (64) pour empêcher le mouvement automatique de balayage de la goulette lorsque les rouleaux d'alimentation ne tournent pas à une vitesse supérieure à une vitesse de rotation de seuil.

2. Faucheuse-chargeuse suivant la revendication 1, caractérisée en ce que l'ensemble de commande (64) comprend une horloge de mode debalayage qui arrive à expiration après un laps de temps prédéterminé, en ce que le balayage automatique est empêché tant que l'horloge n'est pas arrivée en fin de temporisation, et en ce que le dispositif détecteur (65) redémarre périodiquement l'horloge lorsque les rouleaux d'alimentation ne tournent pas à une vitesse supérieure à la vitesse de rotation de seuil.

3. Faucheuse-chargeuse suivant la revendication 1 ou 2, caractérisée par des moyens (120) pour engendrer un signal d'avertissement (ANI) en réponse à une défaillance du dispositif détecteur (65).

4. Faucheuse-chargeuse suivant la revendication 3, dans laquelle le dispositif détecteur (65) comprend un capteur magnétique à bobine d'induction, caractérisée en ce que les moyens d'avertissement (120) appliquent une tension de polarisation en courant continu à la bobine, et en ce que le signal d'avertissement (ANI) est dérivé de la tension aux bornes de la bobine.

5. Faucheuse-chargeuse suivant la revendication 3 ou 4, caractérisée en ce que les moyens d'avertissement (120) fournissent un avertissement (105—108) à l'opérateur, et en ce que cet avertissement est inhibié lorsque les rouleaux d'alimentation ne tournent pas à une vitesse supérieure à la vitesse de rotation de seuil.

6. Faucheuse-chargeuse suivant l'une quelconque des revendications 1 à 5, caractérisée en ce que le capteur (65) comprend un capteur magnétique qui engendre un signal de capteur (T1) présentant des transitions à zéro, à des intervalles déterminés par la vitesse de rotation des rouleaux d'alimentation.

7. Faucheuse-chargeuse suivant la revendication 6, caractérisée en ce que l'ensemble de commande (64) mesure lesdits intervalles et établit un bit de données à une première et une deuxième valeurs lorsque l'intervalle est respectivement plus court et plus long qu'une valeur de seuil, en ce que l'ensemble de commande introduit les bits de données dans un registre à décalage multi-bits, et en ce que le balayage automatique est empêché lorsque tous les bits dans le registre à décalage présentent la deuxième valeur.

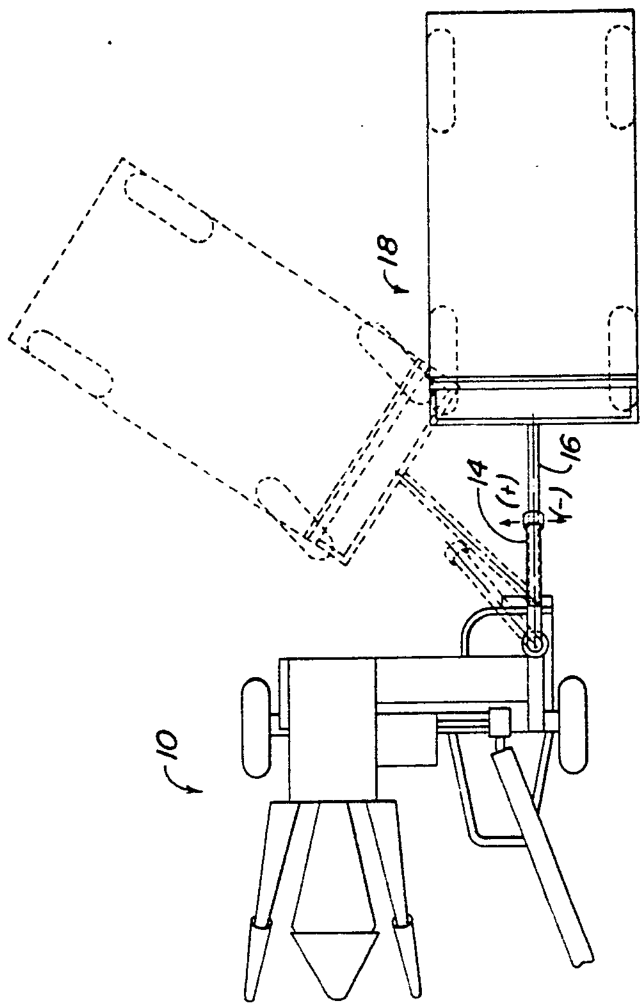


FIG. 1

FIG. 2

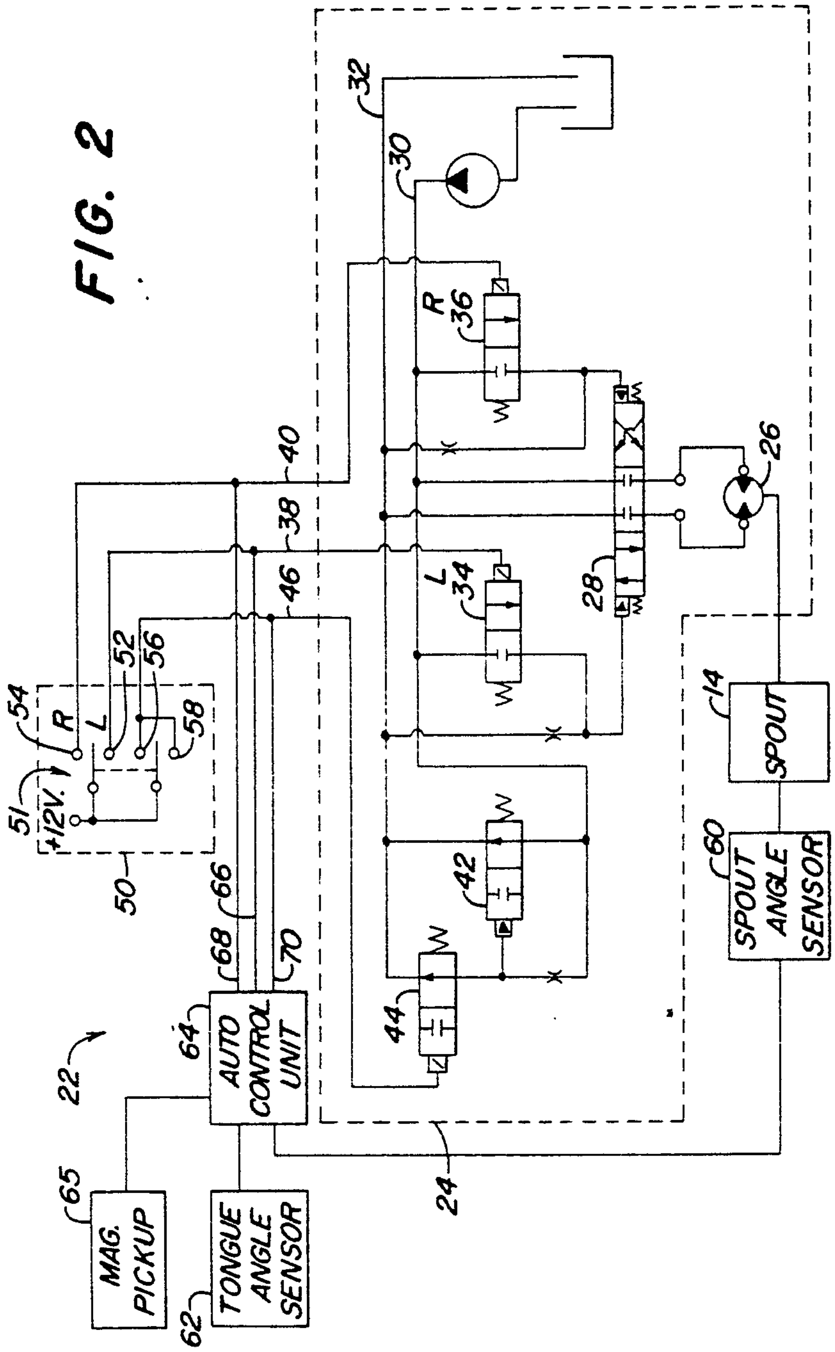
+12V.
R
L
AUTO CONTROL UNIT
MAG. PICKUP
TONGUE ANGLE SENSOR
SPOUT
SPOUT ANGLE SENSOR
R
L
14
22
24
26
28
30
32
34
36
38
40
42
44
46
50
51
52
54
56
58
60
62
64
65
66
68
70

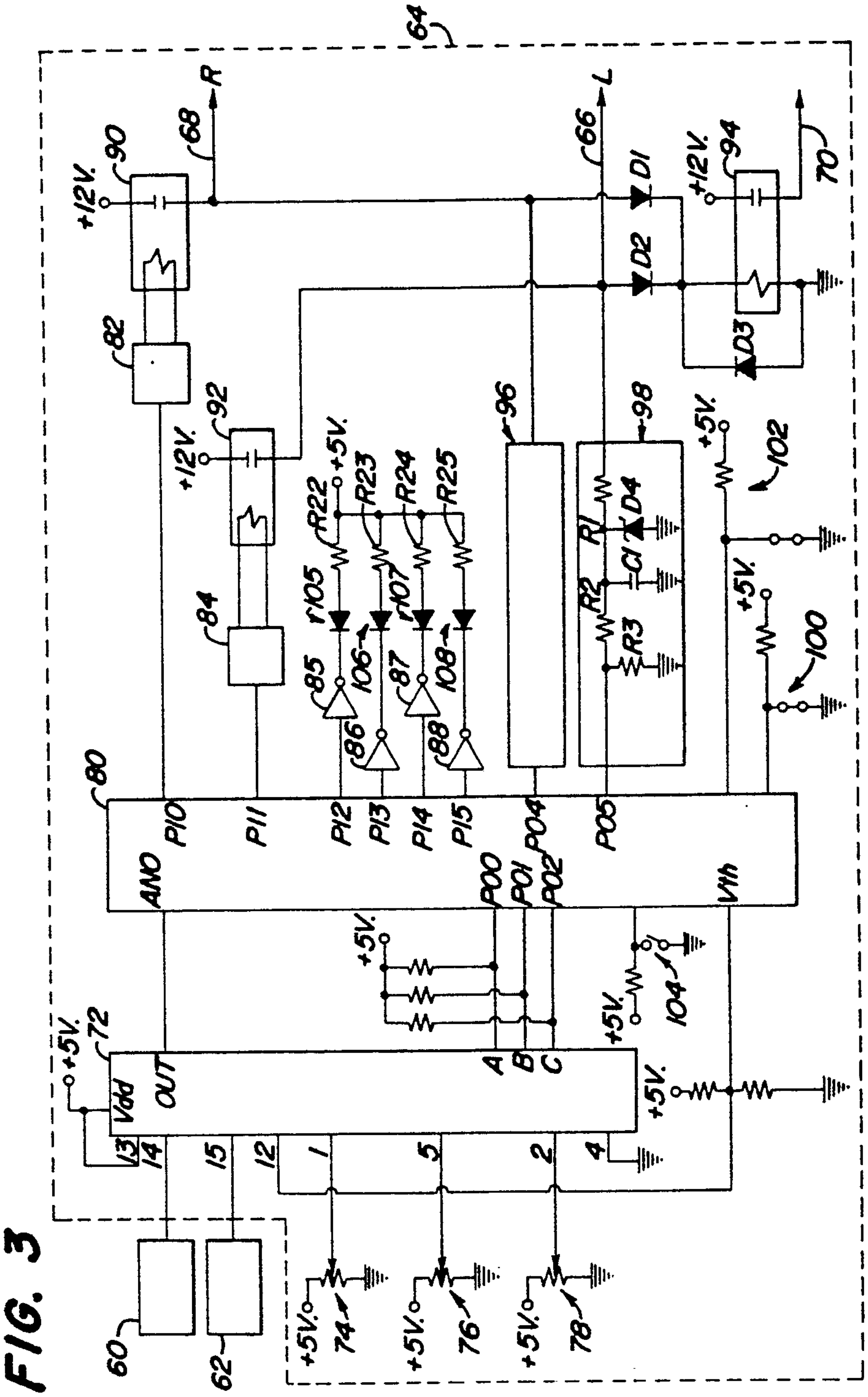
64
R
L
68
66
70
+12V.
90
94
92
D1
D2
D3
D4
82
84
96
98
+5V.
R22
R23
R24
R25
R1
R2
R3
C1
102
100
r105
106
r107
108
85
86
87
88
80
P10
P11
P12
P13
P14
P15
P04
P05
AN0
P00
P01
P02
Vth
104
72
Vdd
OUT
A
B
C
13
14
15
12
1
5
2
4
60
62
74
76
78

FIG. 3

FIG. 4a

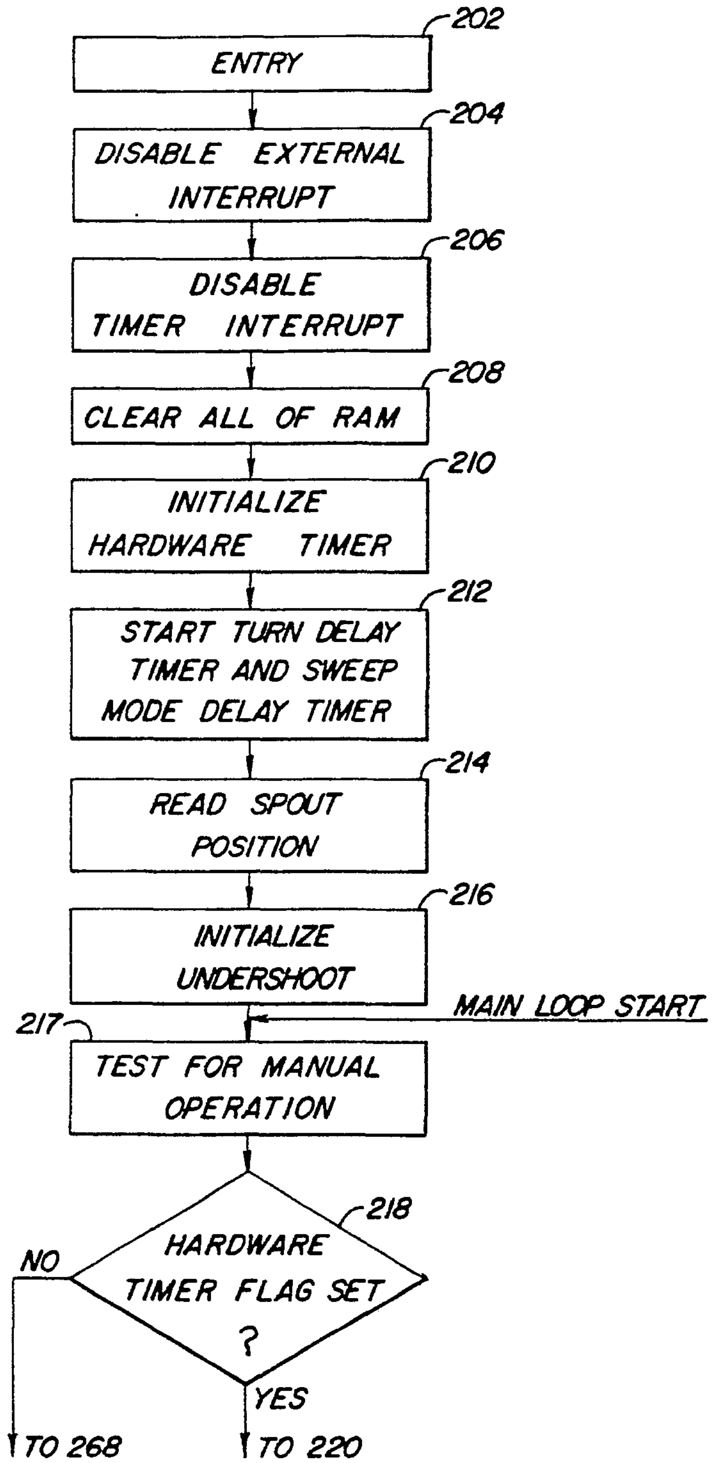
202
ENTRY
204
DISABLE EXTERNAL INTERRUPT
206
DISABLE TIMER INTERRUPT
208
CLEAR ALL OF RAM
210
INITIALIZE HARDWARE TIMER
212
START TURN DELAY TIMER AND SWEEP MODE DELAY TIMER
214
READ SPOUT POSITION
216
INITIALIZE UNDERSHOOT
MAIN LOOP START
217
TEST FOR MANUAL OPERATION
218
HARDWARE TIMER FLAG SET ?
NO
YES
TO 268
TO 220

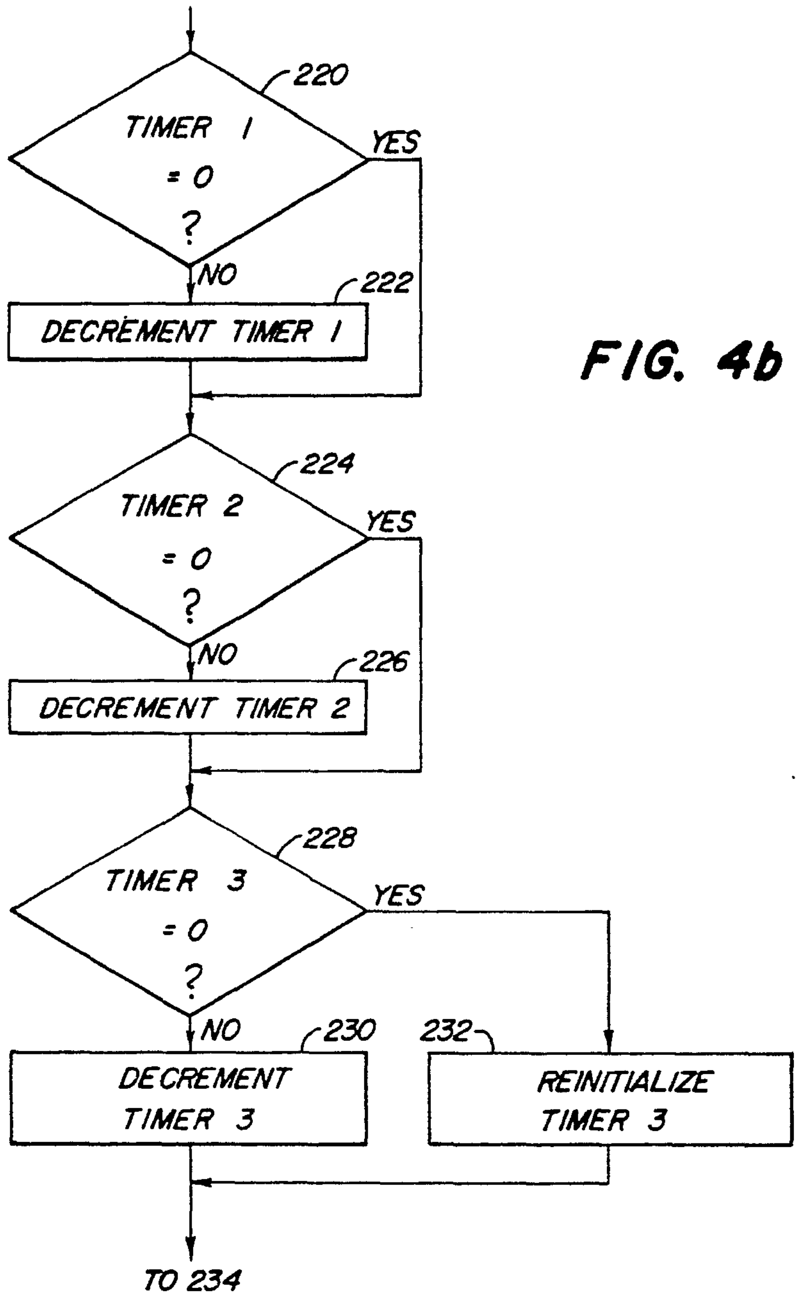
220
TIMER 1
= 0
?
YES
NO
222
DECREMENT TIMER 1
224
TIMER 2
= 0
?
YES
NO
226
DECREMENT TIMER 2
228
TIMER 3
= 0
?
YES
NO
230
232
DECREMENT
TIMER 3
REINITIALIZE
TIMER 3
TO 234

FIG. 4b

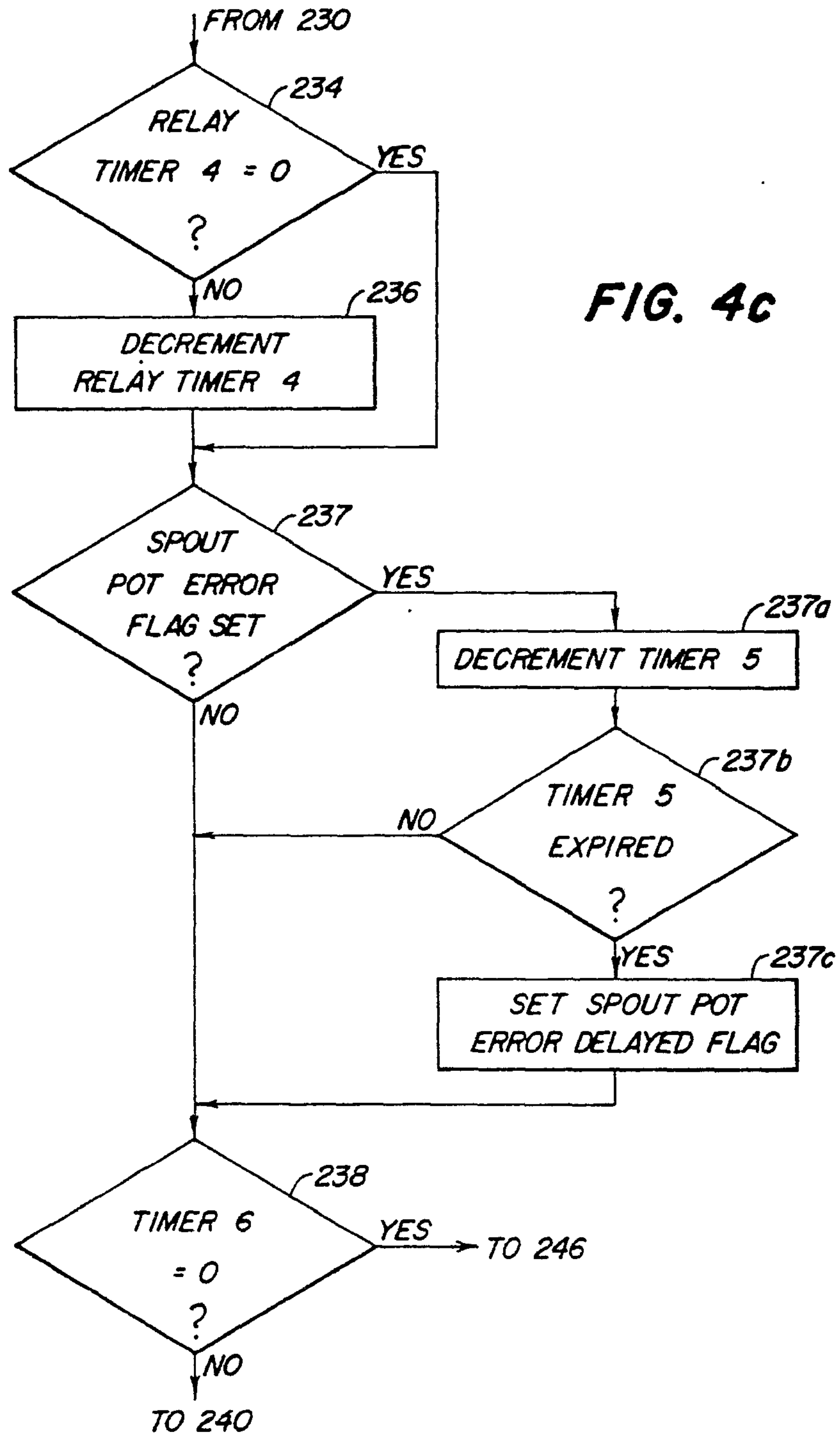
FROM 230
234
RELAY TIMER 4 = 0 ?
YES
NO
236
DECREMENT RELAY TIMER 4
237
SPOUT POT ERROR FLAG SET ?
YES
237a
DECREMENT TIMER 5
NO
237b
TIMER 5 EXPIRED ?
NO
YES
237c
SET SPOUT POT ERROR DELAYED FLAG
238
TIMER 6 = 0 ?
YES
TO 246
NO
TO 240

FIG. 4c

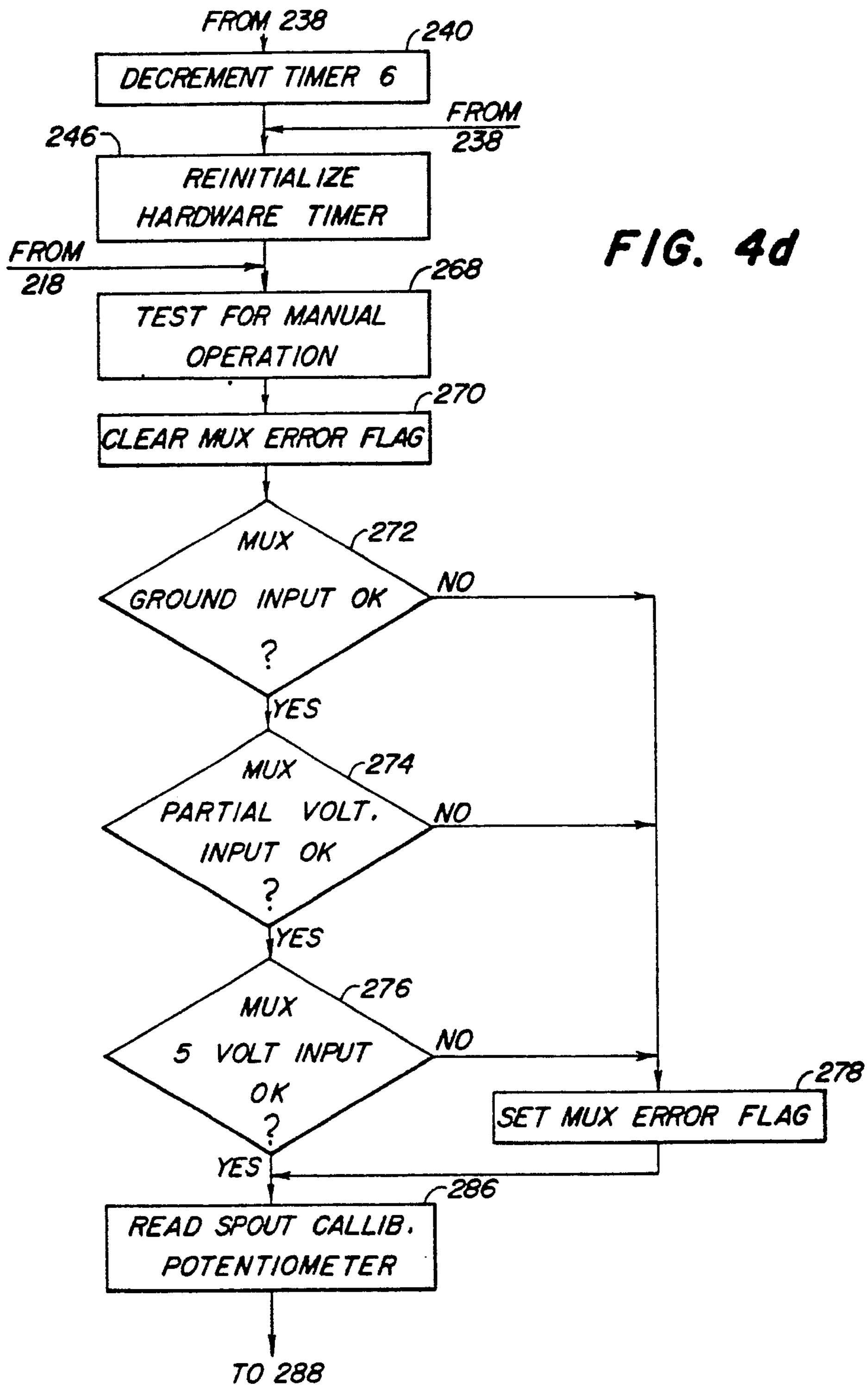
FROM 238
240
DECREMENT TIMER 6
FROM 238
246
REINITIALIZE HARDWARE TIMER
FROM 218
268
TEST FOR MANUAL OPERATION
270
CLEAR MUX ERROR FLAG
MUX GROUND INPUT OK ?
272
NO
YES
MUX PARTIAL VOLT. INPUT OK ?
274
NO
YES
MUX 5 VOLT INPUT OK ?
276
NO
YES
278
SET MUX ERROR FLAG
286
READ SPOUT CALLIB. POTENTIOMETER
TO 288

FIG. 4d

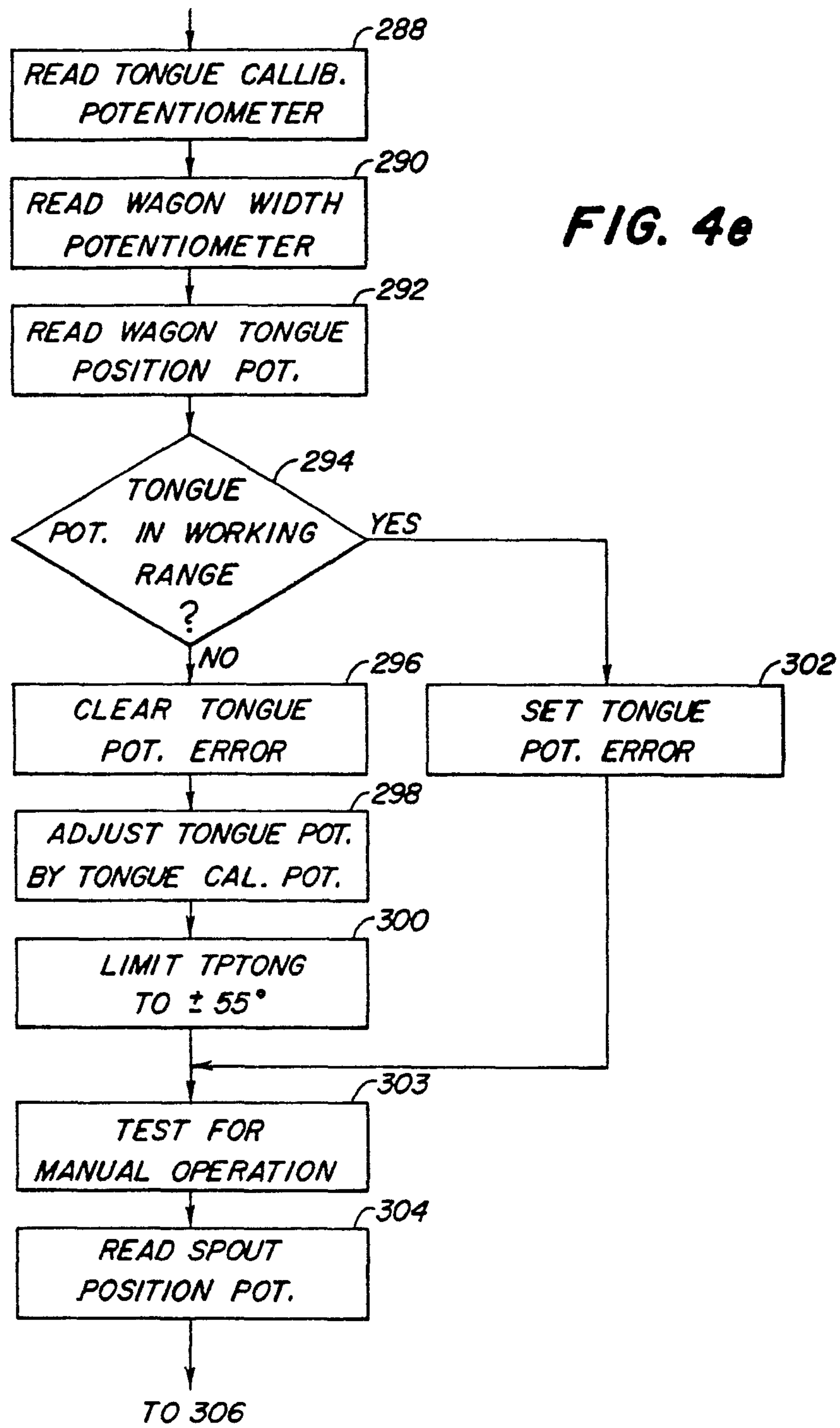
288
READ TONGUE CALLIB. POTENTIOMETER
290
READ WAGON WIDTH POTENTIOMETER
292
READ WAGON TONGUE POSITION POT.
294
TONGUE POT. IN WORKING RANGE ?
YES
NO
296
CLEAR TONGUE POT. ERROR
302
SET TONGUE POT. ERROR
298
ADJUST TONGUE POT. BY TONGUE CAL. POT.
300
LIMIT TPTONG TO ± 55°
303
TEST FOR MANUAL OPERATION
304
READ SPOUT POSITION POT.
TO 306

FIG. 4e

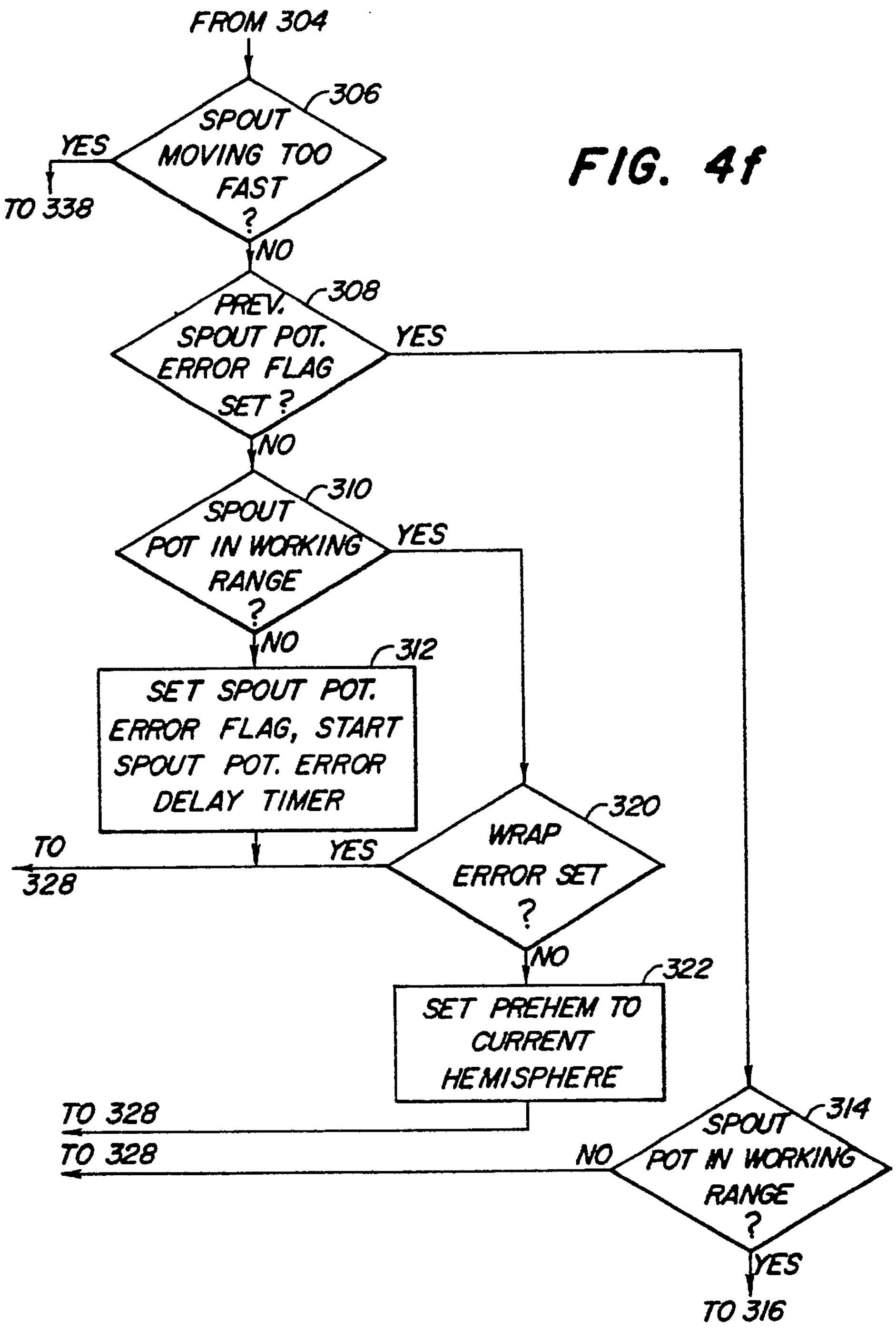
FROM 304
306
SPOUT MOVING TOO FAST ?
YES
TO 338
NO
308
PREV. SPOUT POT. ERROR FLAG SET ?
YES
NO
310
SPOUT POT IN WORKING RANGE ?
YES
NO
312
SET SPOUT POT. ERROR FLAG, START SPOUT POT. ERROR DELAY TIMER
320
WRAP ERROR SET ?
YES
TO 328
NO
322
SET PREHEM TO CURRENT HEMISPHERE
TO 328
TO 328
NO
314
SPOUT POT IN WORKING RANGE ?
YES
TO 316

FIG. 4f

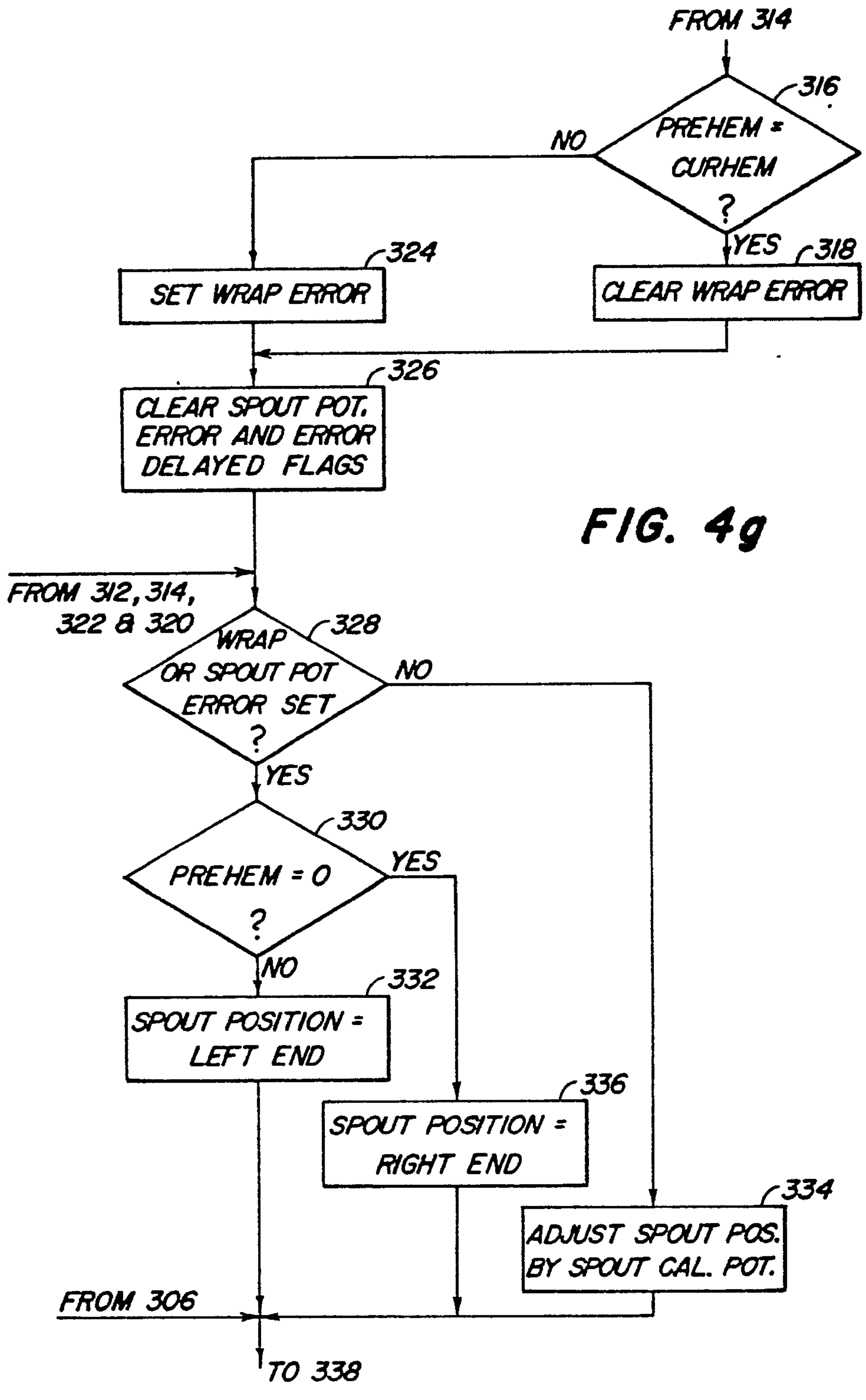
FROM 314
316
PREHEM = CURHEM ?
NO
YES
318
CLEAR WRAP ERROR
324
SET WRAP ERROR
326
CLEAR SPOUT POT. ERROR AND ERROR DELAYED FLAGS
FROM 312, 314, 322 & 320
328
WRAP OR SPOUT POT ERROR SET ?
NO
YES
330
PREHEM = 0 ?
YES
NO
332
SPOUT POSITION = LEFT END
336
SPOUT POSITION = RIGHT END
334
ADJUST SPOUT POS. BY SPOUT CAL. POT.
FROM 306
TO 338

FIG. 4g

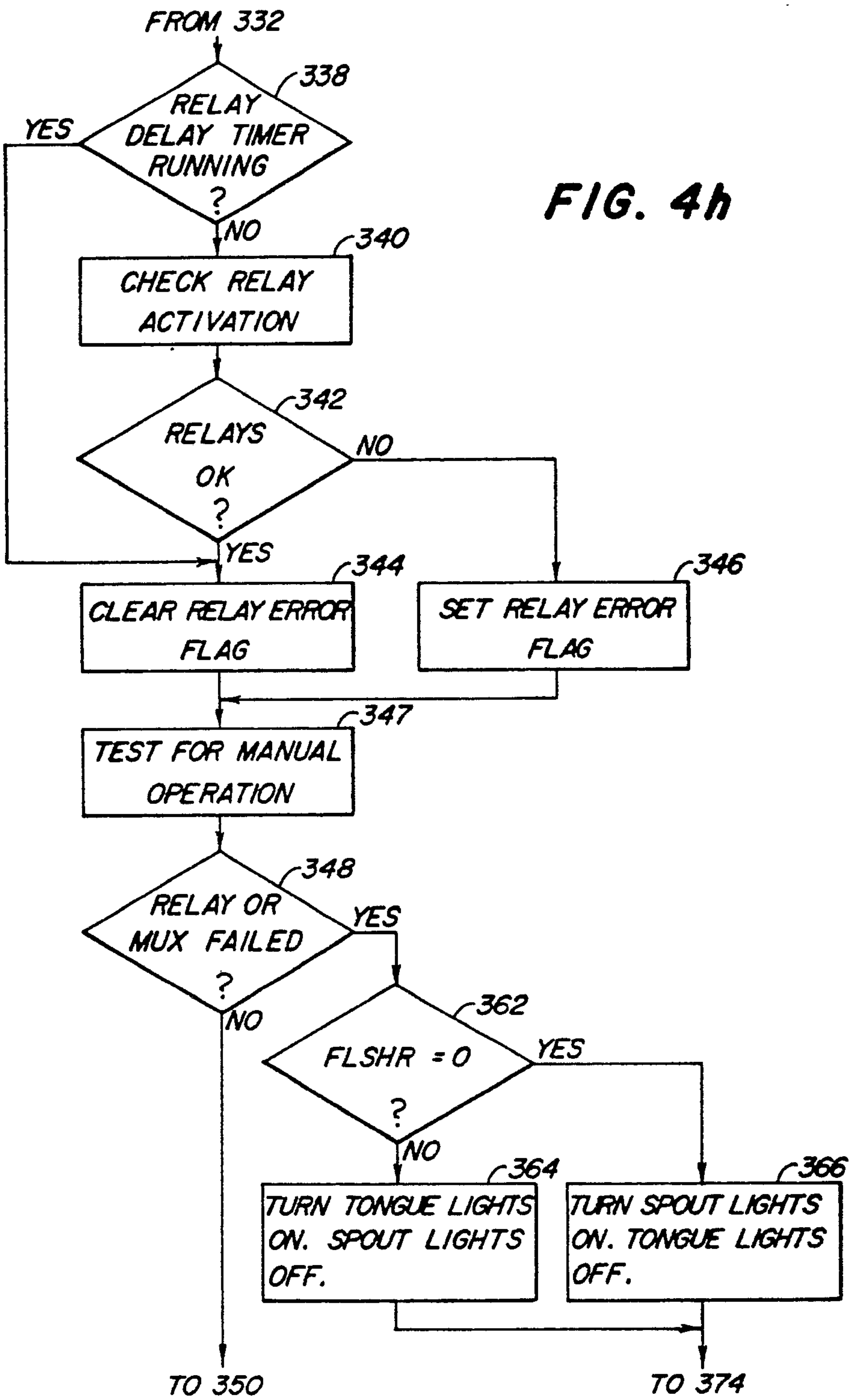
FROM 332
338
RELAY DELAY TIMER RUNNING ?
YES
NO
340
CHECK RELAY ACTIVATION
342
RELAYS OK ?
NO
YES
344
CLEAR RELAY ERROR FLAG
346
SET RELAY ERROR FLAG
347
TEST FOR MANUAL OPERATION
348
RELAY OR MUX FAILED ?
YES
NO
362
FLSHR = 0 ?
YES
NO
364
TURN TONGUE LIGHTS ON. SPOUT LIGHTS OFF.
366
TURN SPOUT LIGHTS ON. TONGUE LIGHTS OFF.
TO 350
TO 374

FIG. 4h

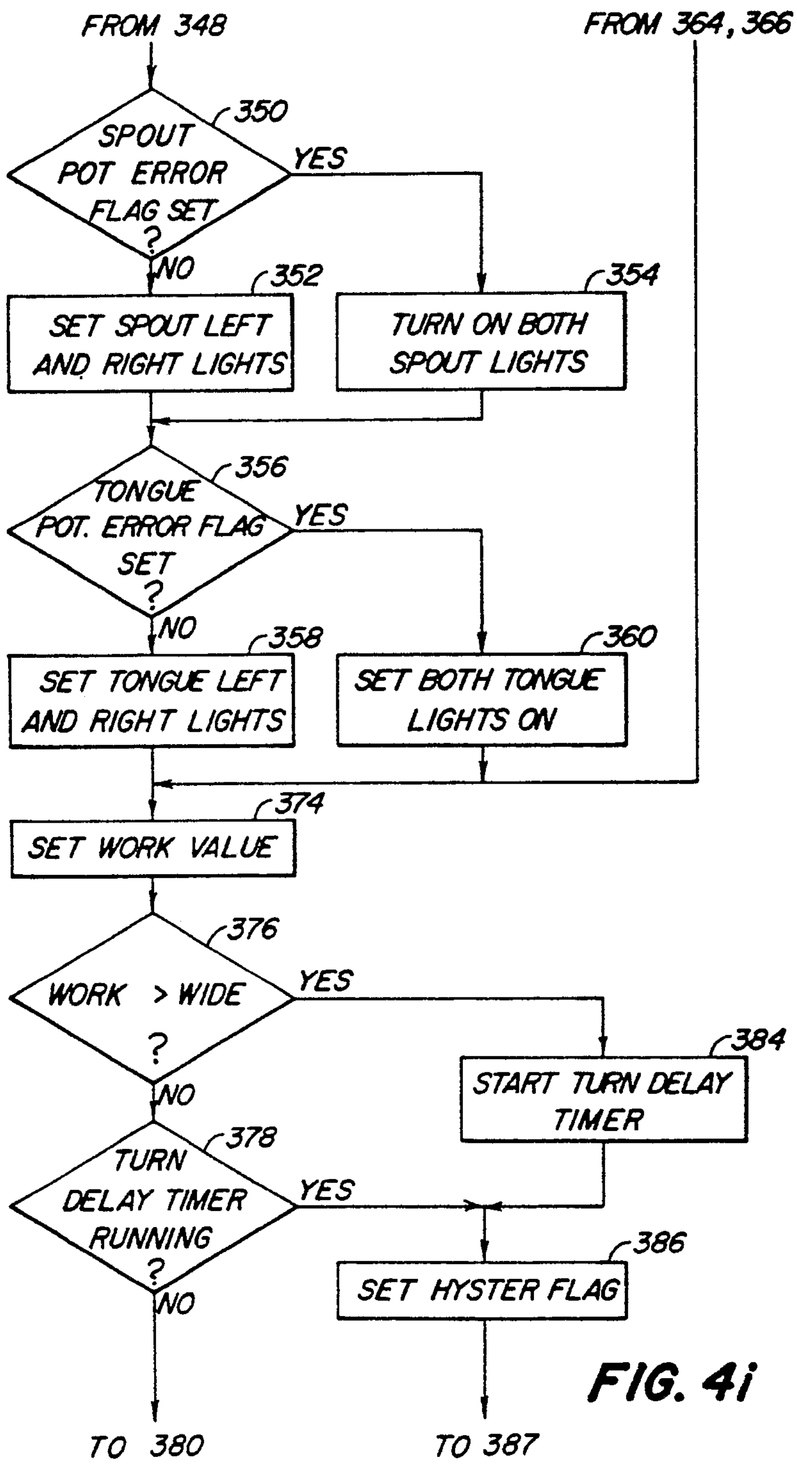
FROM 348
FROM 364, 366
SPOUT POT ERROR FLAG SET ?
350
YES
NO
352
SET SPOUT LEFT AND RIGHT LIGHTS
354
TURN ON BOTH SPOUT LIGHTS
356
TONGUE POT. ERROR FLAG SET ?
YES
NO
358
SET TONGUE LEFT AND RIGHT LIGHTS
360
SET BOTH TONGUE LIGHTS ON
374
SET WORK VALUE
376
WORK > WIDE ?
YES
NO
384
START TURN DELAY TIMER
378
TURN DELAY TIMER RUNNING ?
YES
NO
386
SET HYSTER FLAG
TO 380
TO 387

FIG. 4i

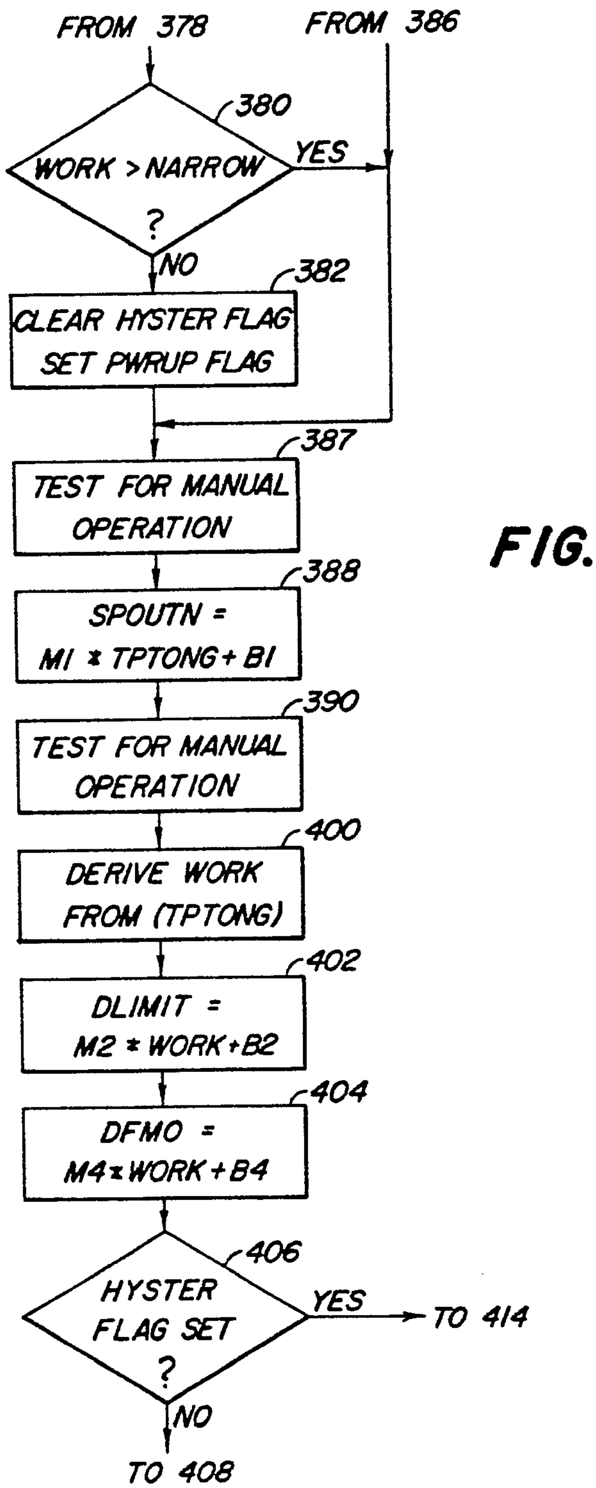
FROM 378
FROM 386
380
WORK > NARROW ?
YES
NO
382
CLEAR HYSTER FLAG
SET PWRUP FLAG
387
TEST FOR MANUAL OPERATION
388
SPOUTN = MI * TPTONG + BI
390
TEST FOR MANUAL OPERATION
400
DERIVE WORK FROM (TPTONG)
402
DLIMIT = M2 * WORK + B2
404
DFMO = M4 * WORK + B4
406
HYSTER FLAG SET ?
YES
TO 414
NO
TO 408

FIG. 4j

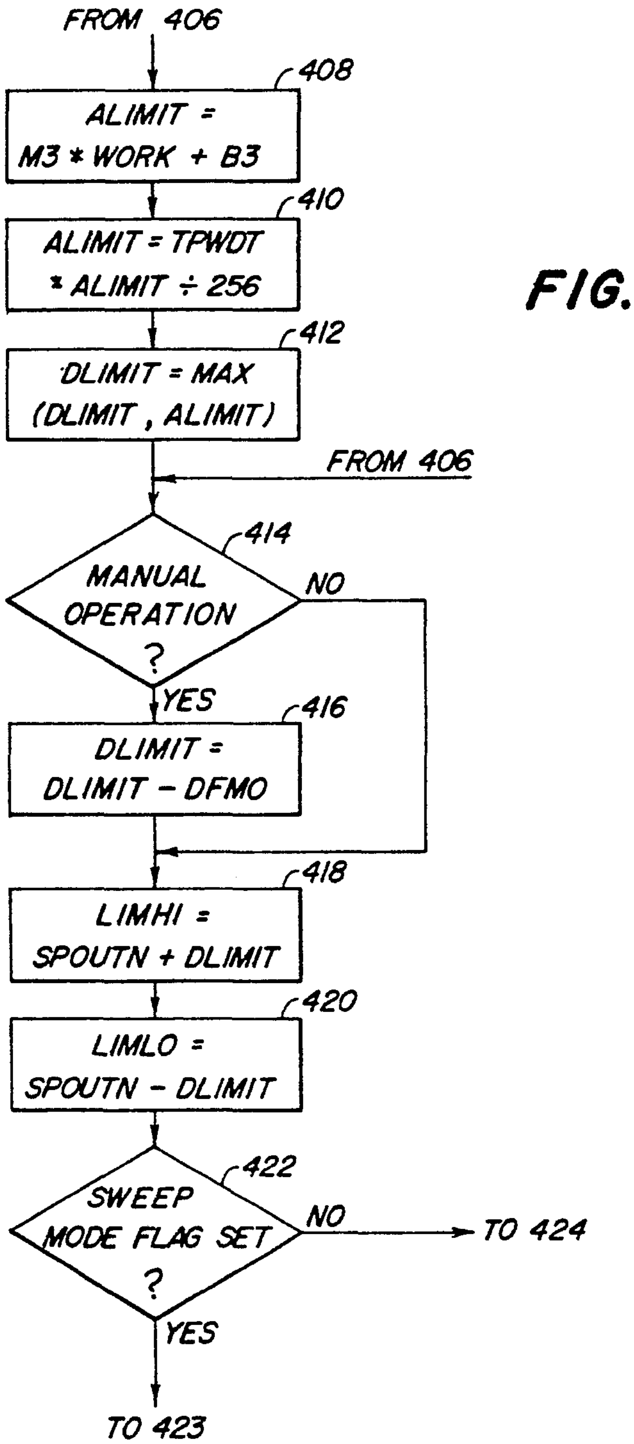
FROM 406
408
ALIMIT = M3 * WORK + B3
410
ALIMIT = TPWDT * ALIMIT ÷ 256
412
DLIMIT = MAX (DLIMIT, ALIMIT)
FROM 406
414
MANUAL OPERATION ?
NO
YES
416
DLIMIT = DLIMIT − DFMO
418
LIMHI = SPOUTN + DLIMIT
420
LIMLO = SPOUTN − DLIMIT
422
SWEEP MODE FLAG SET ?
NO
TO 424
YES
TO 423

FIG. 4k

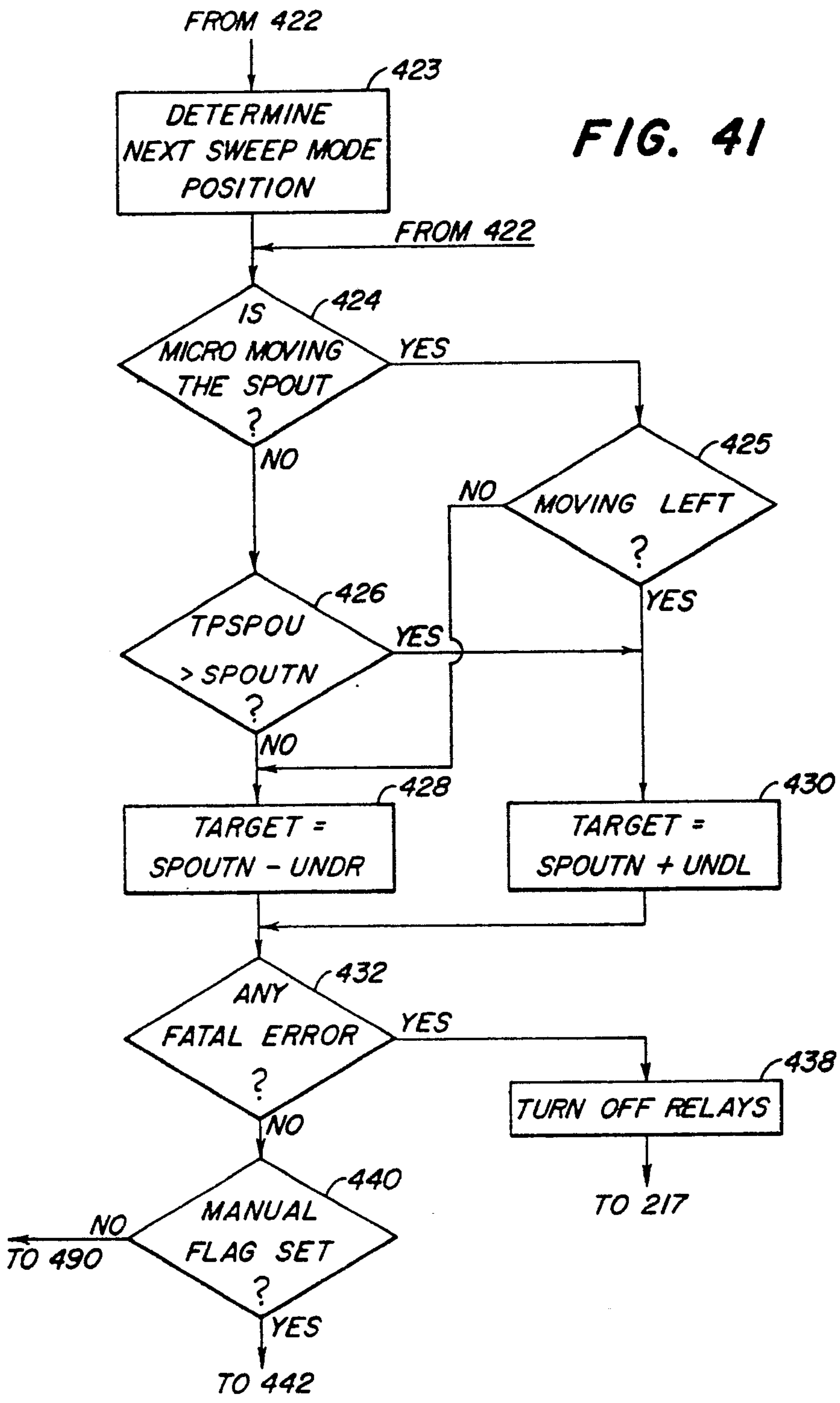
FROM 422
423
DETERMINE NEXT SWEEP MODE POSITION
FROM 422
424
IS MICRO MOVING THE SPOUT ?
YES
NO
425
MOVING LEFT ?
NO
YES
426
TPSPOU > SPOUTN ?
YES
NO
428
TARGET = SPOUTN − UNDR
430
TARGET = SPOUTN + UNDL
432
ANY FATAL ERROR ?
YES
NO
438
TURN OFF RELAYS
TO 217
440
MANUAL FLAG SET ?
NO
TO 490
YES
TO 442

FIG. 41

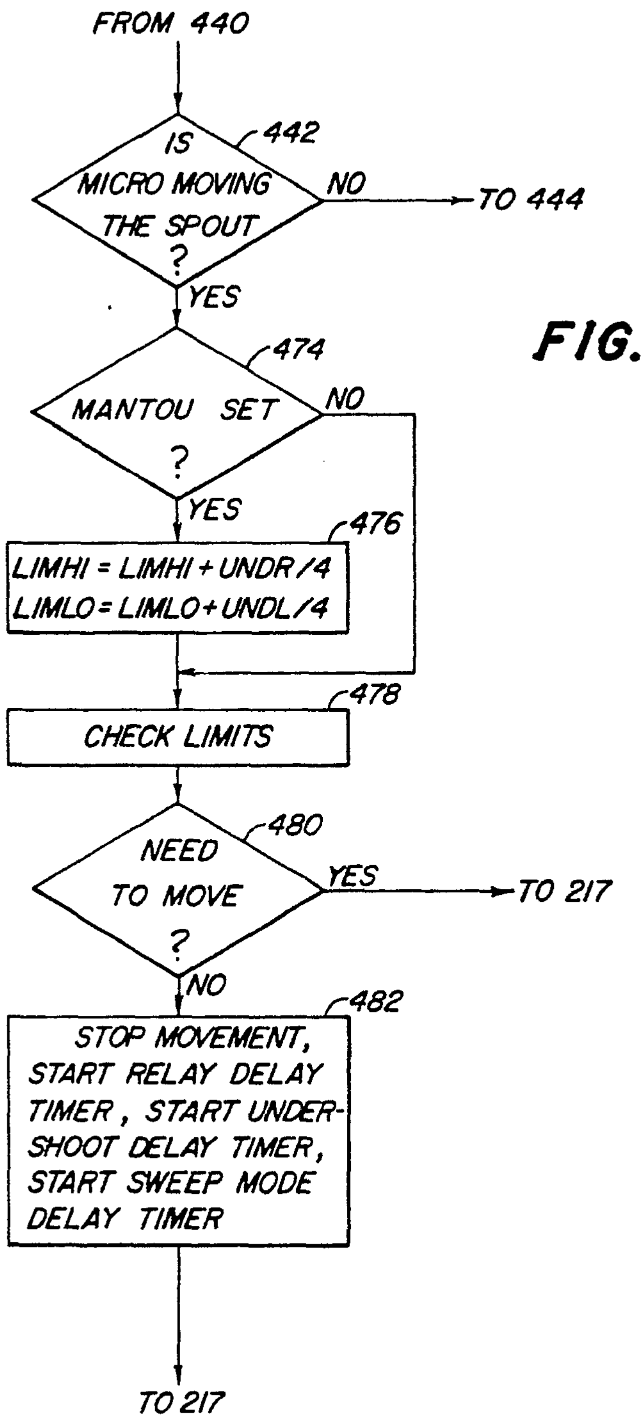
FROM 440
IS MICRO MOVING THE SPOUT ?
442
NO
TO 444
YES
474
MANTOU SET ?
NO
YES
476
LIMHI = LIMHI + UNDR/4
LIMLO = LIMLO + UNDL/4
478
CHECK LIMITS
480
NEED TO MOVE ?
YES
TO 217
NO
482
STOP MOVEMENT, START RELAY DELAY TIMER, START UNDER-SHOOT DELAY TIMER, START SWEEP MODE DELAY TIMER
TO 217

FIG. 4m

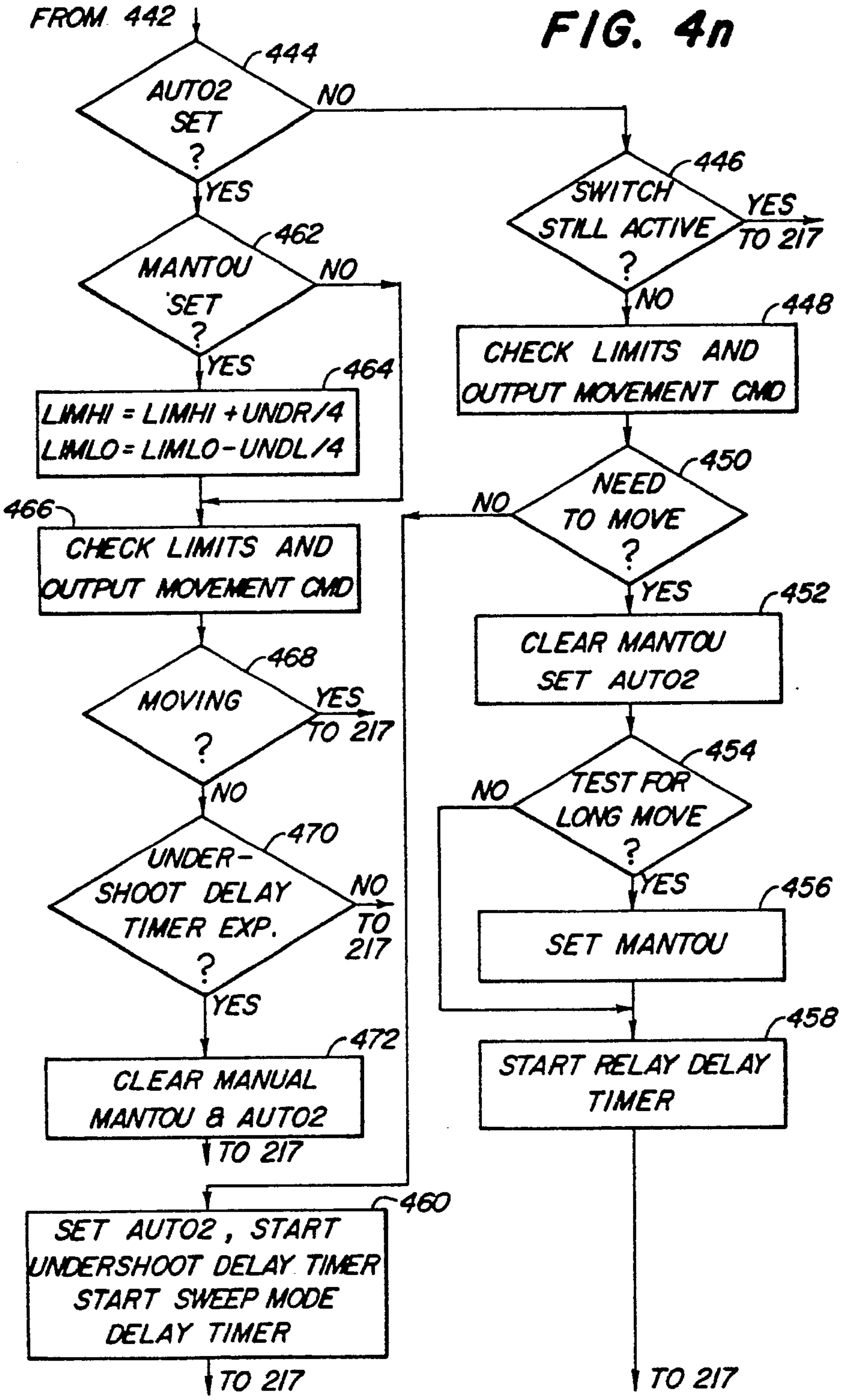
FROM 442
444
AUTO2 SET ?
NO
YES
446
SWITCH STILL ACTIVE ?
YES TO 217
NO
448
CHECK LIMITS AND OUTPUT MOVEMENT CMD
462
MANTOU SET ?
NO
YES
464
LIMHI = LIMHI + UNDR/4
LIMLO = LIMLO - UNDL/4
450
NEED TO MOVE ?
NO
YES
466
CHECK LIMITS AND OUTPUT MOVEMENT CMD
452
CLEAR MANTOU SET AUTO2
468
MOVING ?
YES TO 217
NO
454
TEST FOR LONG MOVE ?
NO
YES
470
UNDER-SHOOT DELAY TIMER EXP. ?
NO TO 217
YES
456
SET MANTOU
458
START RELAY DELAY TIMER
472
CLEAR MANUAL MANTOU & AUTO2
TO 217
460
SET AUTO2, START UNDERSHOOT DELAY TIMER START SWEEP MODE DELAY TIMER
TO 217
TO 217

FIG. 4n

FIG. 4o

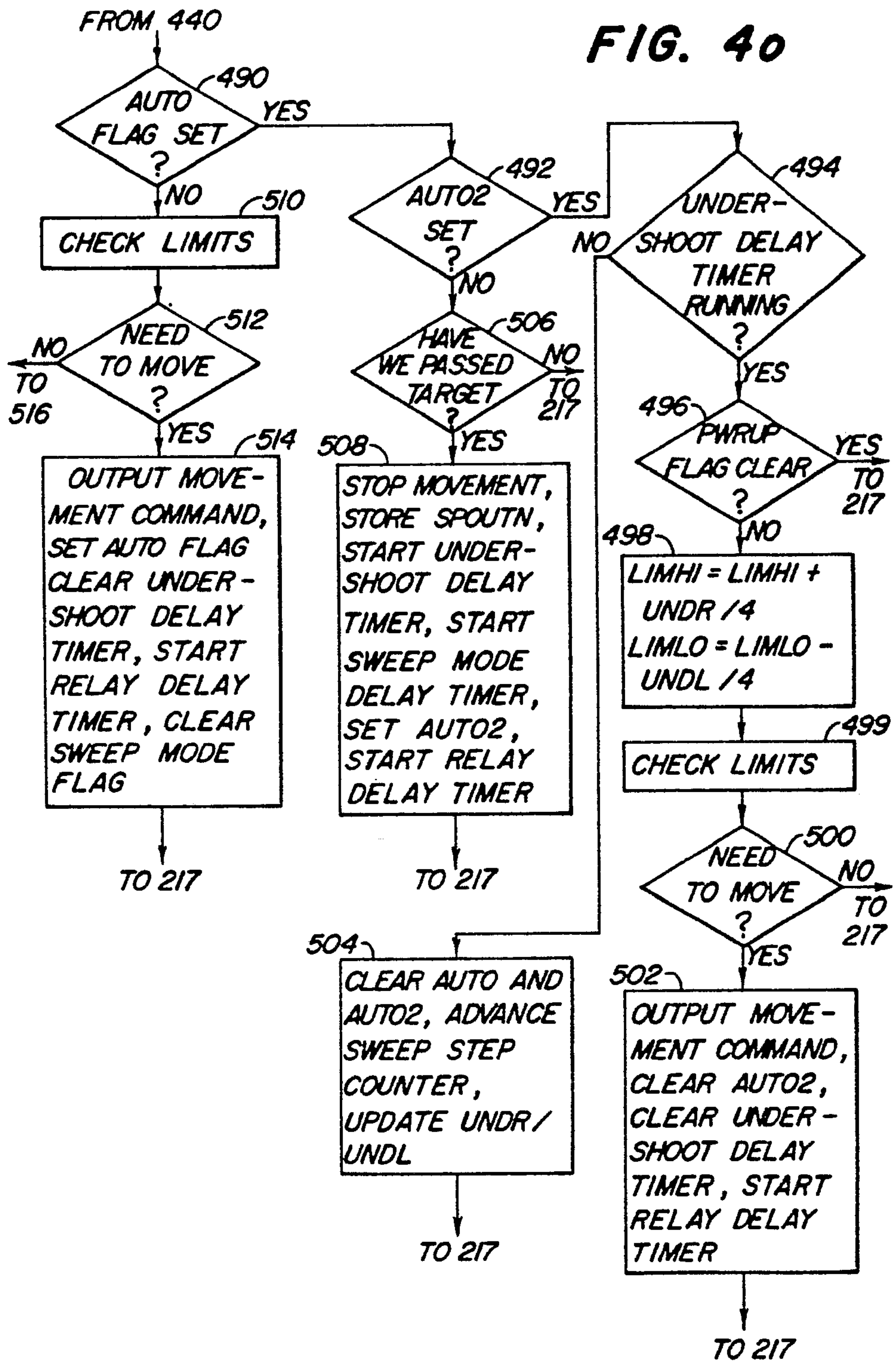
FROM 440
490
AUTO FLAG SET ?
YES
NO
510
CHECK LIMITS
512
NEED TO MOVE ?
NO
TO 516
YES
514
OUTPUT MOVE-MENT COMMAND, SET AUTO FLAG CLEAR UNDER-SHOOT DELAY TIMER, START RELAY DELAY TIMER, CLEAR SWEEP MODE FLAG
TO 217
492
AUTO2 SET ?
YES
NO
506
HAVE WE PASSED TARGET ?
NO
TO 217
YES
508
STOP MOVEMENT, STORE SPOUTN, START UNDER-SHOOT DELAY TIMER, START SWEEP MODE DELAY TIMER, SET AUTO2, START RELAY DELAY TIMER
TO 217
494
UNDER-SHOOT DELAY TIMER RUNNING ?
NO
YES
496
PWRUP FLAG CLEAR ?
YES
TO 217
NO
498
LIMHI = LIMHI + UNDR /4
LIMLO = LIMLO - UNDL /4
499
CHECK LIMITS
500
NEED TO MOVE ?
NO
TO 217
YES
502
OUTPUT MOVE-MENT COMMAND, CLEAR AUTO2, CLEAR UNDER-SHOOT DELAY TIMER, START RELAY DELAY TIMER
TO 217
504
CLEAR AUTO AND AUTO2, ADVANCE SWEEP STEP COUNTER, UPDATE UNDR/UNDL
TO 217

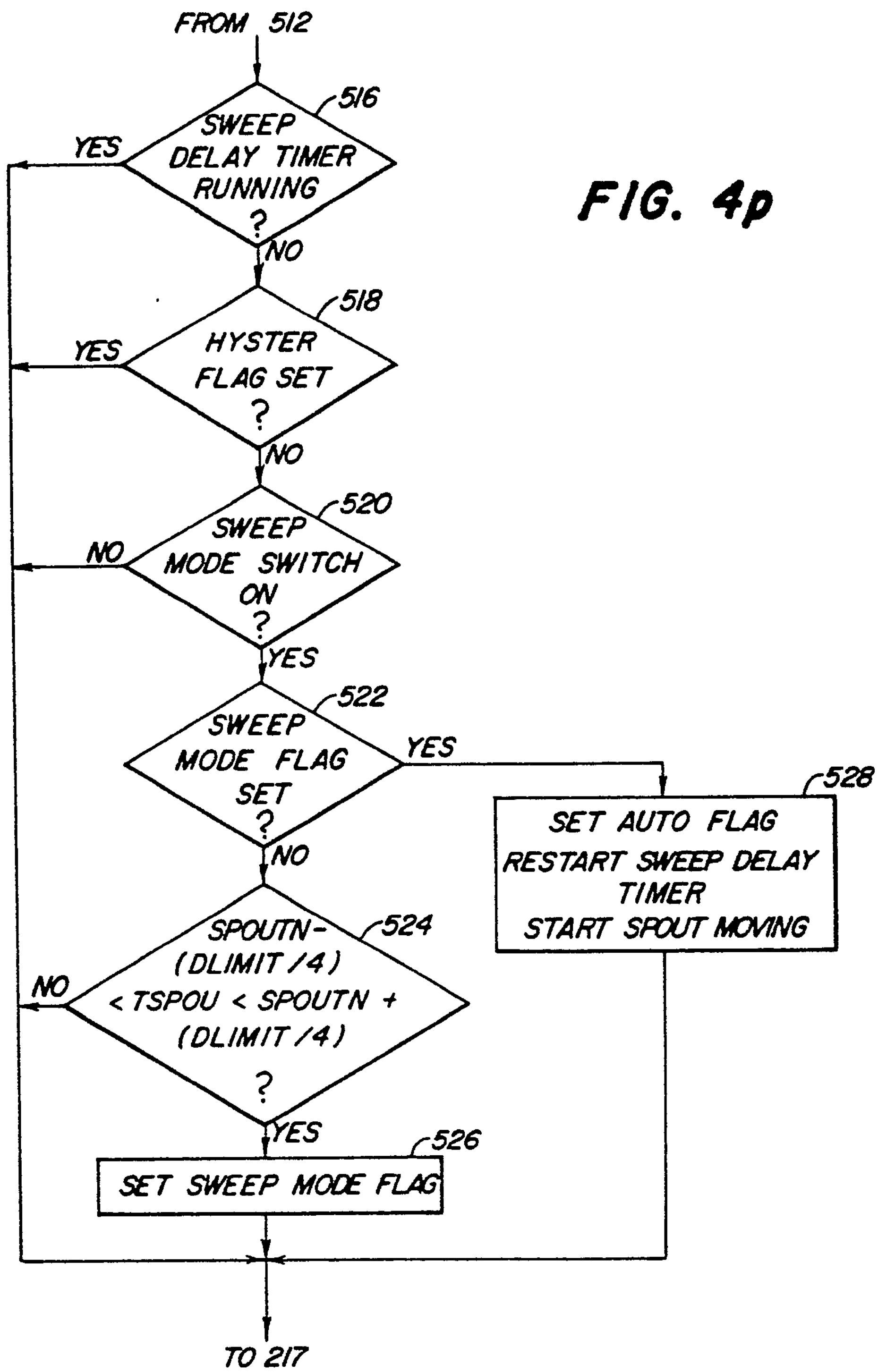
FROM 512
516
SWEEP DELAY TIMER RUNNING ?
YES
NO
518
HYSTER FLAG SET ?
YES
NO
520
SWEEP MODE SWITCH ON ?
NO
YES
522
SWEEP MODE FLAG SET ?
YES
NO
528
SET AUTO FLAG
RESTART SWEEP DELAY TIMER
START SPOUT MOVING
524
SPOUTN-(DLIMIT/4) < TSPOU < SPOUTN + (DLIMIT/4) ?
NO
YES
526
SET SWEEP MODE FLAG
TO 217

FIG. 4p

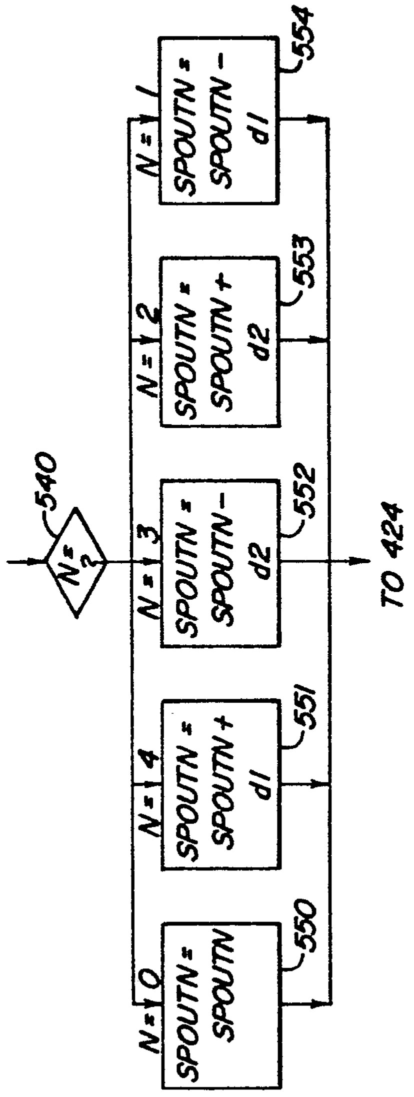
N=?
540
N=0
SPOUTN = SPOUTN
550
N=4
SPOUTN = SPOUTN + d1
551
N=3
SPOUTN = SPOUTN − d2
552
N=2
SPOUTN = SPOUTN + d2
553
N=1
SPOUTN = SPOUTN − d1
554
TO 424

FIG. 5

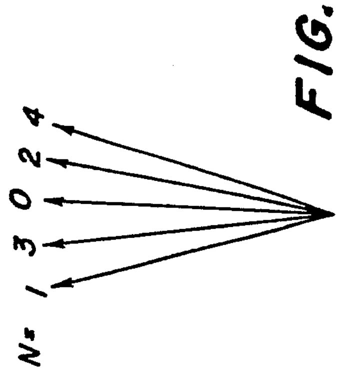
N= 1 3 0 2 4

FIG. 6

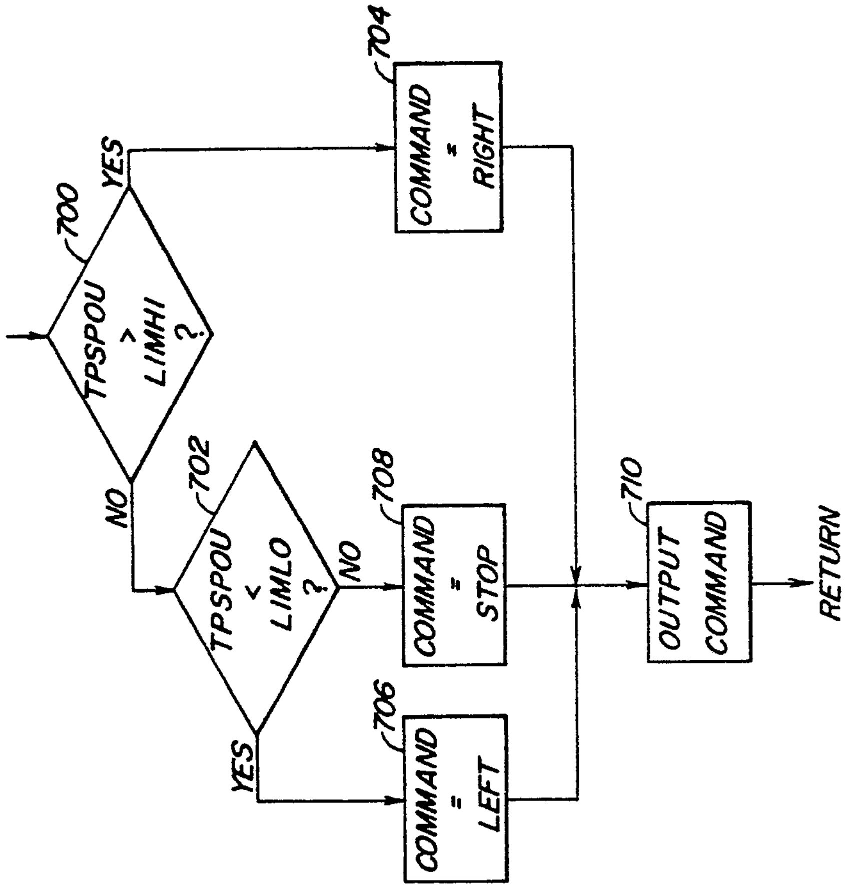
700
TPSPOU > LIMHI ?
YES
NO
702
TPSPOU < LIMLO ?
YES
NO
704
COMMAND = RIGHT
706
COMMAND = LEFT
708
COMMAND = STOP
710
OUTPUT COMMAND
RETURN

FIG. 7

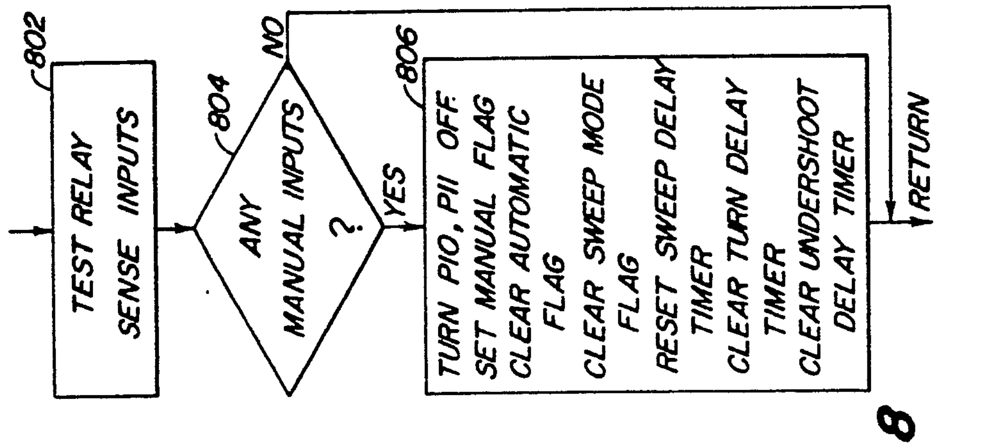
802
TEST RELAY SENSE INPUTS
804
ANY MANUAL INPUTS ?
NO
YES
806
TURN PIO, PII OFF.
SET MANUAL FLAG
CLEAR AUTOMATIC FLAG
CLEAR SWEEP MODE FLAG
RESET SWEEP DELAY TIMER
CLEAR TURN DELAY TIMER
CLEAR UNDERSHOOT DELAY TIMER
RETURN

FIG. 8

FIG. 9

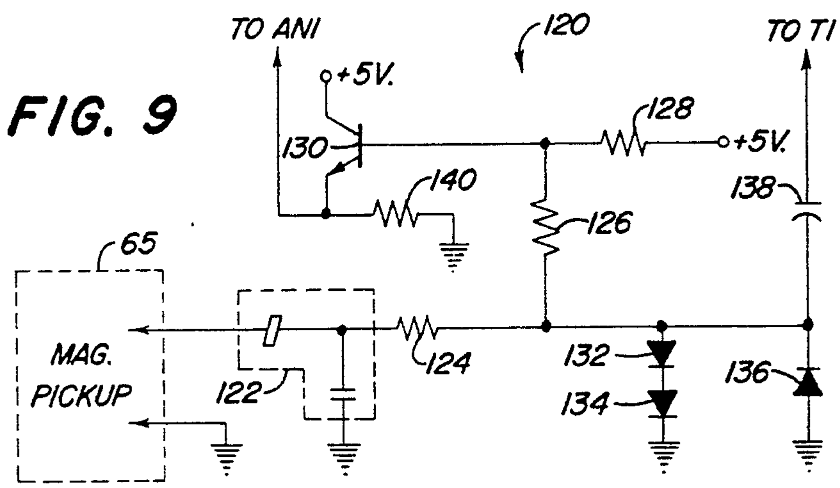
TO ANI
120
TO TI
+5V.
128
+5V.
130
140
138
126
65
MAG.
PICKUP
124
132
136
122
134

FIG. 14

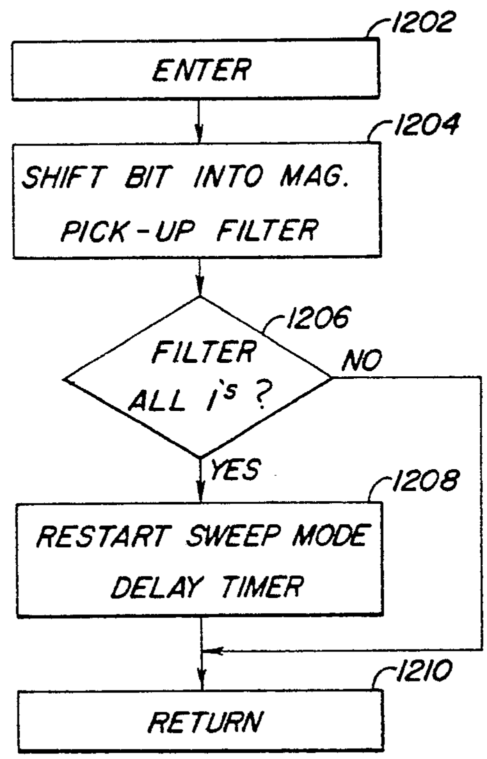
1202
ENTER
1204
SHIFT BIT INTO MAG. PICK-UP FILTER
1206
FILTER ALL 1's ?
NO
YES
1208
RESTART SWEEP MODE DELAY TIMER
1210
RETURN

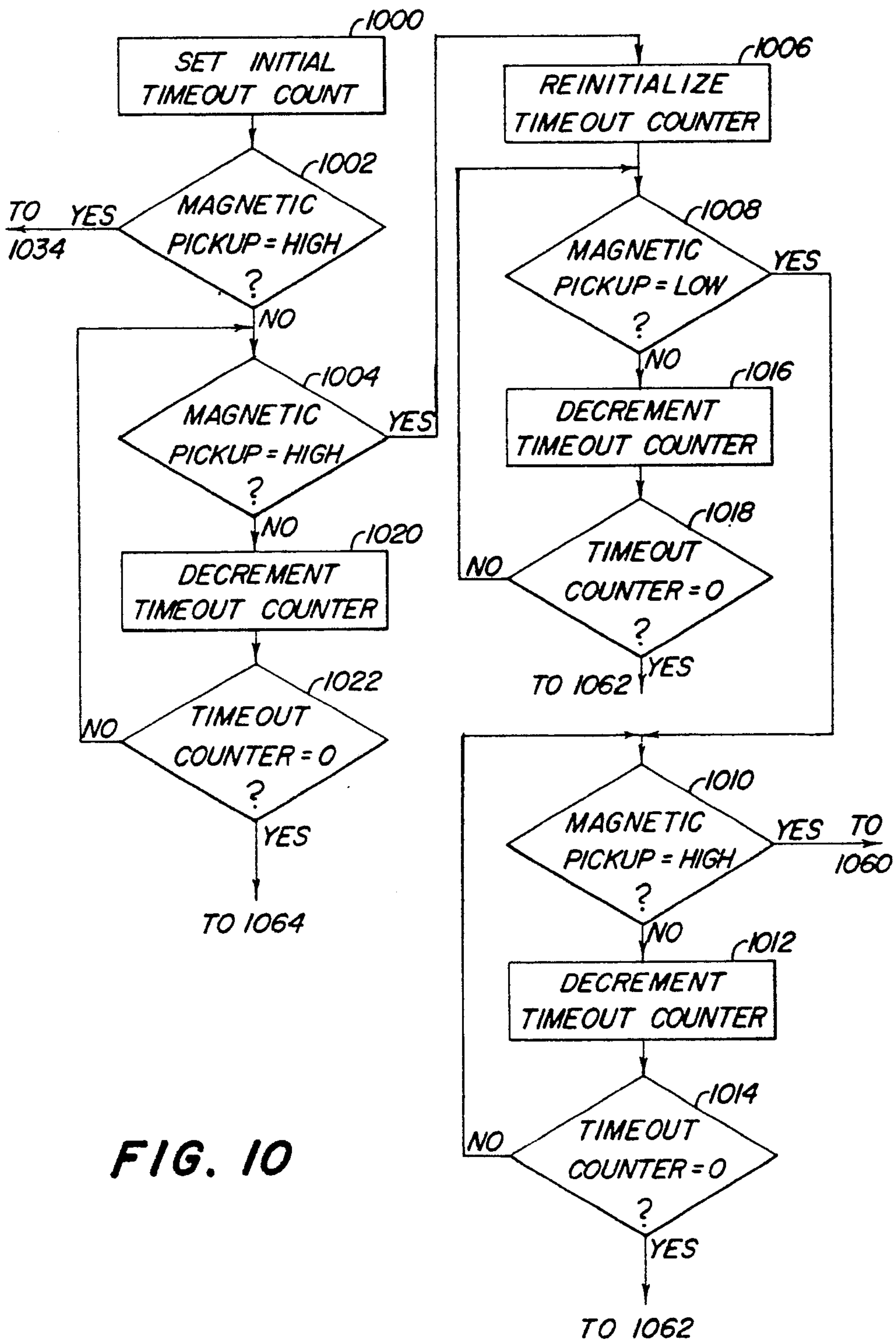
1000
SET INITIAL TIMEOUT COUNT
1002
MAGNETIC PICKUP = HIGH ?
TO 1034
YES
NO
1004
MAGNETIC PICKUP = HIGH ?
YES
NO
1020
DECREMENT TIMEOUT COUNTER
1022
TIMEOUT COUNTER = 0 ?
NO
YES
TO 1064
1006
REINITIALIZE TIMEOUT COUNTER
1008
MAGNETIC PICKUP = LOW ?
YES
NO
1016
DECREMENT TIMEOUT COUNTER
1018
TIMEOUT COUNTER = 0 ?
NO
YES
TO 1062
1010
MAGNETIC PICKUP = HIGH ?
YES
TO 1060
NO
1012
DECREMENT TIMEOUT COUNTER
1014
TIMEOUT COUNTER = 0 ?
NO
YES
TO 1062

FIG. 10

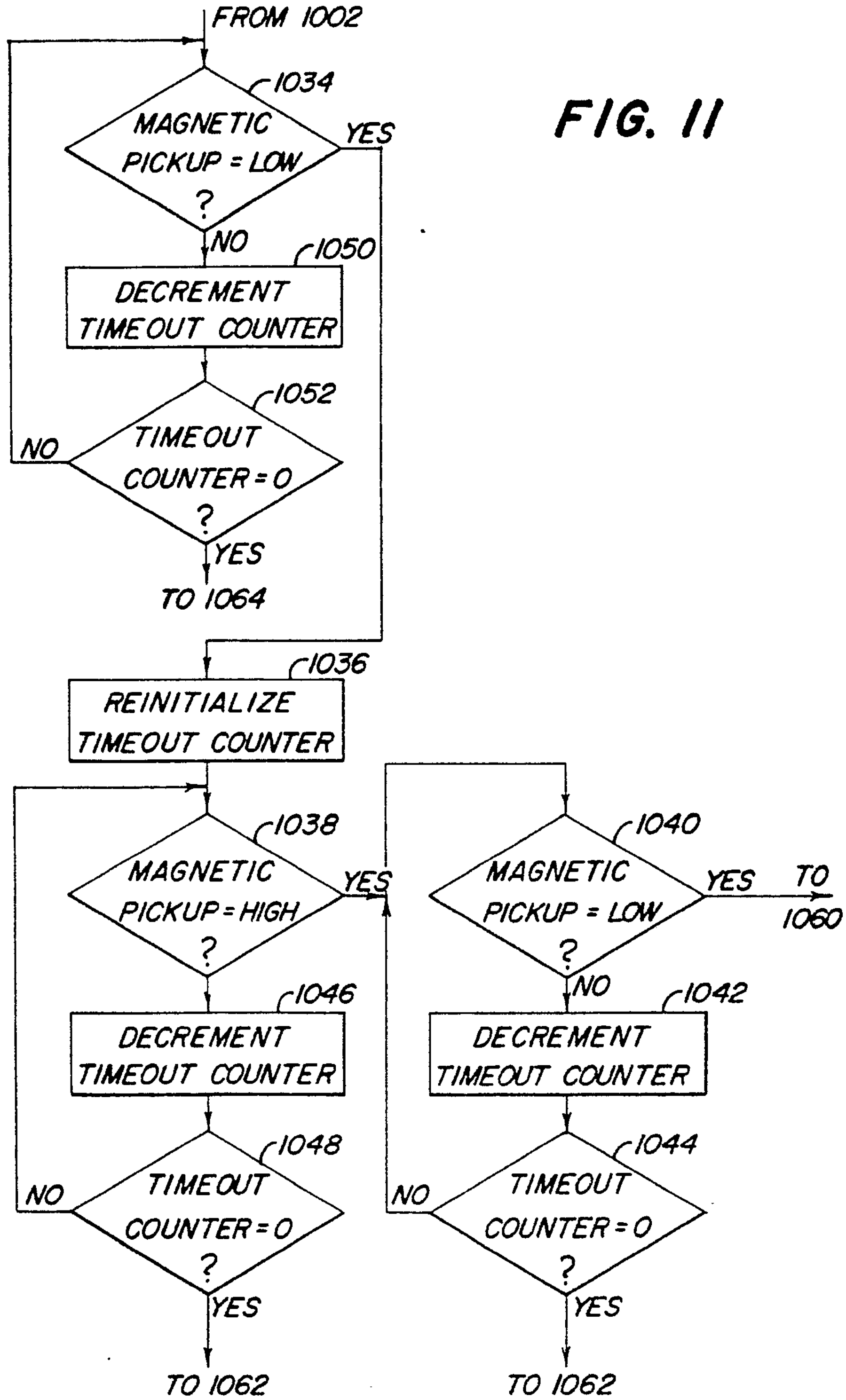
FROM 1002
1034
MAGNETIC PICKUP = LOW ?
YES
NO
1050
DECREMENT TIMEOUT COUNTER
1052
TIMEOUT COUNTER = 0 ?
NO
YES
TO 1064
1036
REINITIALIZE TIMEOUT COUNTER
1038
MAGNETIC PICKUP = HIGH ?
YES
1040
MAGNETIC PICKUP = LOW ?
YES
TO 1060
NO
1046
DECREMENT TIMEOUT COUNTER
1042
DECREMENT TIMEOUT COUNTER
1048
TIMEOUT COUNTER = 0 ?
NO
YES
TO 1062
1044
TIMEOUT COUNTER = 0 ?
NO
YES
TO 1062

FIG. 11

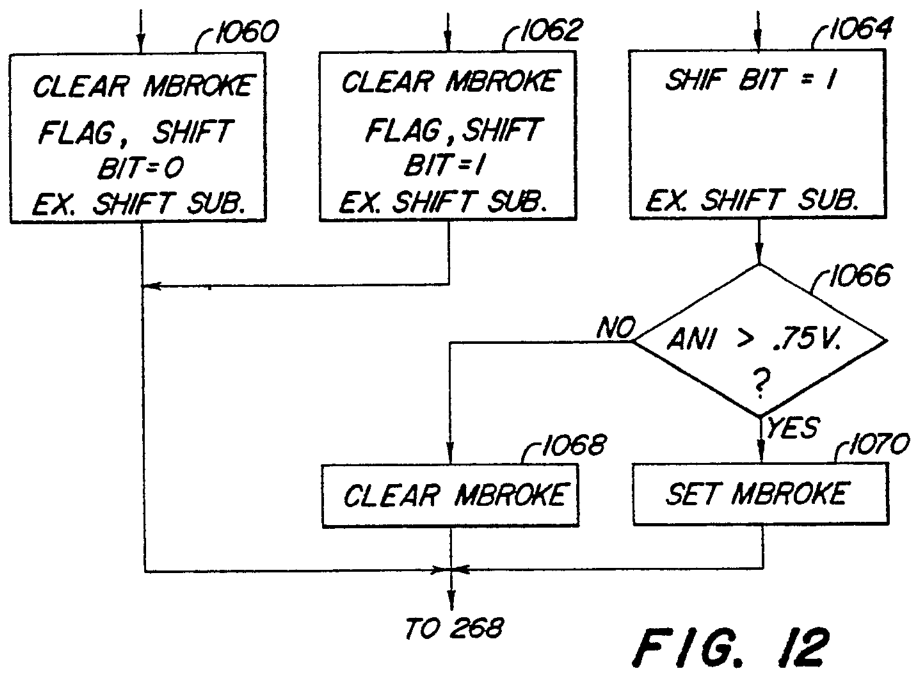
1060
CLEAR MBROKE FLAG, SHIFT BIT=0 EX. SHIFT SUB.
1062
CLEAR MBROKE FLAG, SHIFT BIT=1 EX. SHIFT SUB.
1064
SHIF BIT = 1 EX. SHIFT SUB.
1066
ANI > .75V. ?
NO
YES
1068
CLEAR MBROKE
1070
SET MBROKE
TO 268

FIG. 12

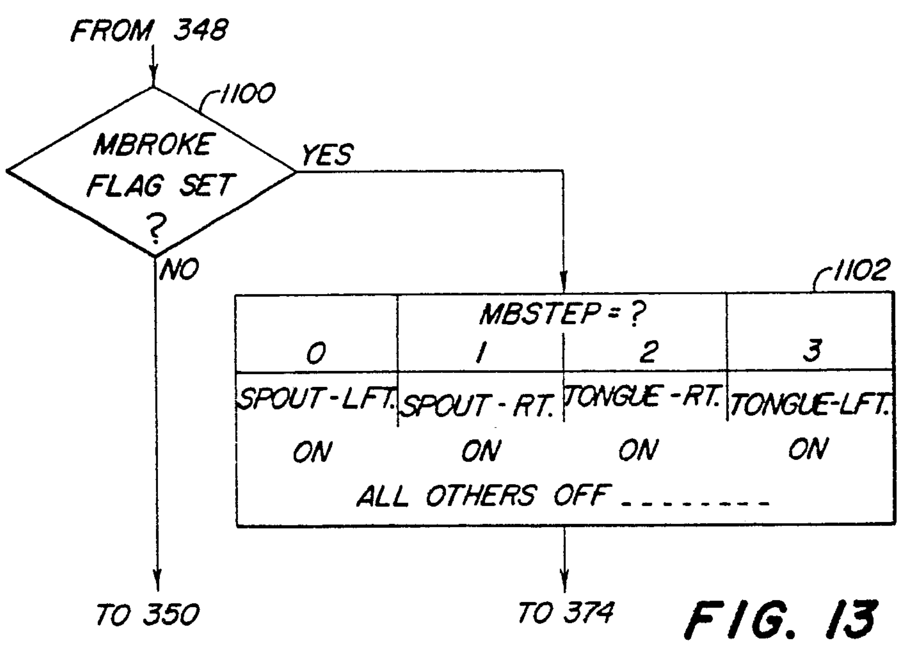
FROM 348
1100
MBROKE FLAG SET ?
YES
NO
1102
MBSTEP = ?
0
1
2
3
SPOUT-LFT.
SPOUT-RT.
TONGUE-RT.
TONGUE-LFT.
ON
ON
ON
ON
ALL OTHERS OFF --------
TO 350
TO 374

FIG. 13